# EUROPÄISCHE PATENTANMELDUNG

(11) **EP 4 461 474 A1**
(43) Veröffentlichungstag der Anmeldung: **13.11.2024**
(21) Anmeldenummer: 23172167.1
(22) Anmeldetag: 08.05.2023
(51) Int. Cl.: B25J 9/16, B05D 5/00, B62D 65/00, G01N 21/00

(54) **PLANUNG UND REAKTIVE ABARBEITUNG EINER DEFEKTBEARBEITUNG MIT ROBOTERN EINER AUF BASIS VON LOW-COST INSPEKTIONSDATEN**

(71) Anmelder: Convergent Information Technologies GmbH, 4053 Haid bei Ansfelden (AT)
(72) Erfinder: Eberst, Christof, 4053 Haid bei Ansfelden (AT)
(74) Vertreter: Westphal, Mussgnug & Partner, Patentanwälte mbB

(57) **Zusammenfassung**

Es wird ein Verfahren zur Roboterbahnplanung zum Zwecke der Durchführung einer robotergestützten Reparatur von Oberflächendefekten beschrieben (Spot Repair), wobei das Werkstück mittels erster Sensoren (z.B. Kameras) und anschließend mittels robotergeführter zweiter Sensoren inspiziert wird, wobei Roboterbahnen zur Inspektion und zur Bearbeitung des Defekts erzeugt bzw. geplant werden. Gemäß einem Beispiel umfasst das Verfahren:

- Durchführen einer ersten optischen Inspektion eines Werkstücks mittels eines oder mehrerer ersten Sensoren;

- Detektieren von Defekten auf der Oberfläche des Werkstücks und Ermitteln von ersten Defektdaten;

- Durchführen einer automatischen, computergestützten ersten Roboterbahnplanung zur Ermittlung einer Roboterbahn für eine zweite Inspektion des Werkstücks und zur Ermittlung einer oder mehrerer Roboterbahnen zur Bearbeitung des Defekts;

- Durchführen der zweiten optischen Inspektion des Werkstücks mittels eines oder mehrere robotergeführten, zweiten Sensoren und Ermitteln von zweiten Defektdaten;

- Prüfen ob der Defekt mit einer ersten der geplanten Roboterbahnen oder einer anderen der geplanten Roboterbahnen bearbeitet werden kann,

und falls ja, automatisches, robotergestütztes Bearbeiten des Defekts;

und falls nein, Durchführen einer zweiten Roboterbahnplanung zur Ermittlung einer neuen Roboterbahn zur Bearbeitung des mindestens einen Defekt basierend auf den jeweiligen zweiten Defektdaten, und automatisches, robotergestütztes Bearbeiten des mindestens einen Defekts unter Verwendung der neuen Roboterbahn.

## Beschreibung

### TECHNISCHES GEBIET

Die vorliegende Erfindung betrifft die computergestützte (automatische und halbautomatische) Programmierung von Robotern, beispielsweise Roboter zur Reparatur von Oberflächendefekten oder Nachbearbeitung von Werkstückoberflächen gemäß Input von Sensoren.

### HINTERGRUND

Eine Aufgabe (Task) von Robotern in der Produktion besteht in der automatisierten Bearbeitung von Werkstückoberflächen zur Reparatur von vorab gefundenen Defekten auf der Oberfläche. Zur Programmierung solcher Aufgaben werden mittels reaktiver automatischer Programmierung ausführbare Roboterprogramme erstellt, die von einer Robotersteuerung umgesetzt werden können (siehe z.B. US 2003/0139836 A1). Ein Roboterprogramm beschreibt von der Robotersteuerung verarbeitbare Befehle, welche die Robotersteuerung in korrespondierende Ansteuersignale an den Roboter und das von dem Roboter bediente Werkzeug (z.B. Schleifwerkzeug, Polierwerkzeug, Sprühpistole zum Auftrag von Poliermittel) umsetzt, sodass der Roboter die programmierten Bewegungen und Aktionen durchführt, um die gewünschte Bearbeitung der Werkstückoberfläche zu erreichen.

Zur eigentlichen Programmierung wird eine Liste vorab gefundener Defekte auf der Oberfläche interpretiert, und basierend auf dieser Liste werden Bewegungen eines oder mehrerer Werkzeuge über oder auf der Oberfläche im Bereich dieser Defekte geplant. Geplant werden auch mit diesen Bewegungen verknüpfte Befehle (z.B. Motoren ein/aus, Sprühauftrag, warten), sowie Zwischenbewegungen zwischen der einzelnen Bereichen, in denen eine Bearbeitung stattfinden soll. Für die Planung der Bewegung auf der Oberfläche werden zum Beispiel "Rezepte" (d.h. eine Kombination von Bewegungen des Werkzeugs und bestimmten Bearbeitungsparametern (Druck, Drehzahl, ...) und Befehlen (Motor ein/aus, Sprühen, ....) ausgewählt. Diese Auswahl erfolgt abhängig von der Art und der Ausprägung des zu bearbeitenden Defekts sowie abhängig von der Form der lokalen Werkstückoberfläche. Das ausgewählte Rezept (Template einer Werkzeugbahn) wird auf den betreffenden Oberflächenbereich angewandt (z.B. durch Projektion auf die Oberfläche oder Abrollen oder mittels anderer Methoden). In vorteilhaften Ausführungen werden die angewandten Werkzeugbahnen je nach Beschaffenheit oder Form der Oberfläche modifiziert und/oder Verschoben um z.B. Kanten oder Spalte nicht zu beschädigen.

In der Vergangenheit wurden die Defekte mittels robotergeführter High-End Sensoren (wie z.B. Reflektometrie- oder Deflektometrie- oder 3D-Profiling Sensoren oder 3D Kameras), welche präzise über die Oberfläche der bewegten oder stehenden Bauteile (Werkstücke) geführt wurden, detektiert und anschließend klassifiziert (siehe US 11,110,611 B2). Derartige High-End Sensoren und die damit verbundenen (Computer-) Systeme sind komplex und teuer. Daher wurde versucht, die Defektermittlung mit solchen High-End-Sensoren, welche von Robotern je nach Bauteil so bewegt wurden, dass sie vergleichsweise nah und in bevorzugter Orientierung über die Bauteiloberfläche geführt werden, gegen kompaktere oder kostengünstigere Methoden zu ersetzen. Bei derartigen Methoden wird die Inspektion oder das Scannen der Bauteile/Werkstücke z.B. mit fest montierten Kameras (z.B. in einem Lichttunnel) durchgeführt, während sich das Bauteil/Werkstück bewegt wird, oder während die Sensoren über das Bauteil in größerer Entfernung und nicht optimaler Ausrichtung geführt werden.

Bei dieser neuen Art der Fehlererkennung wirken sich Lagetoleranzen, Toleranzen in den Öffnungswinkeln von Komponenten der Bauteile (z.B. Türen), weniger präzise Bewegung der Bauteile im Vergleich zu den Bewegungen der Sensoren mit Robotern, Geschwindigkeitsabweichungen usw. stärker aus. Die erkannten Defekte werden oft signifikant ungenauer in ihrer Position bestimmt und die Anzahl an fehlerhaften Klassifikationen von Defekten und die Fehler in der Ermittlung derer Parameter bzw. Ausprägung nimmt zu.

Eine Möglichkeit mit den erwähnten Ungenauigkeiten und Fehlern umzugehen wäre, größere Bereiche um jeden ermittelten Defekt herum zu bearbeiten. Dies erhöht jedoch die Taktzeit und Verschleiß und verschlechtert die Qualität der Fehlerbehebung. Ebenso können mit dieser einfachen Methode fälschlich Defekte bearbeitet werden, welche bei genauerer Information über den Defekt gar nicht bearbeitet werden würden, z.B. Defekte welche unkritisch/vernachlässigbar, zu groß oder zu schwerwiegend sind für eine automatisch Bearbeitung.

Eine weitere Möglichkeit besteht darin, nach der ersten (ungenauen) Inspektion mit einer reduzierten Anzahl an Robotern und Sensoren nur die Bereiche um die vorab gefunden Defekte herum nochmals genauer (z.B. mit robotergeführten Sensoren) zu inspizieren, um deren Lagegenauigkeit und Klassifizierung zu korrigieren und deren Ausprägung bzw. Parameter genauer zu ermitteln. Die Inspektion wird dabei anhand der ursprünglich ermittelten Fehlerliste geplant. In einer vorteilhaften Realisierung werden dabei auch jene Defekte inspiziert, welche gemäß der ursprünglichen Inspektion nicht bearbeitet würden, jedoch nahe an den Schwellwerten, die zu einer Nicht-Bearbeitung führen, liegen. Die hinsichtlich Position und Klasse der Defekte, Bearbeitungsentscheidung, etc. korrigierte Defektliste wird dann zur Planung der eigentlichen Defektbehebung in der nachfolgengen Bearbeitungszelle verwendet (anstelle der ursprünglichen, ungenaueren und weniger zuverlässigeren ersten Messung/Inspektion). Diese Methode reduziert jedoch Kosten- und Platzvorteile der ursprünglichen, günstigeren Lösungen (z.B. automatisierte Lichttunnel). In einer vorteilhaften Realisierung wird diese nachfolgende Inspektion im Line-Tracking durchgeführt um den zusätzlichen Platzbedarf und Hardwareaufwand zu reduzieren. Dies ist insbesondere möglich, da eine Inspektion nur der vorab gefundenen, relevanten Defekte deutlich weniger Zeit erfordert als eine Inspektion des gesamten Bauteils, bzw. eine spätere Bearbeitung der relevanten Defekte.

Die Ausführung einer Bahnkorrektur (z.B. mittels Offsets) beim Schleifen, Polieren, Sprühen etc. zum Ausgleich der ursprünglichen Lageabweichung, wie von Stand der Technik Robotersteuerungen unterstützt, ist jedoch nur für einfache Oberflächen ohne starke Krümmungen oder Kanten zielführend. Eine solche bei Robotern übliche Offsetkorrektur (Korrektur der ursprünglich geplanten Roboterbahn um einen Offset) ist primär gedacht für die Korrektur der vermessenen Lage eines Bauteils oder eines Teils eines Bauteils. Wird eine für einen Defekt geplante Bahn auf dem Bauteil über einen Offset in der Lage verschoben/korrigiert, kann dies bei den Bereichen der Bauteile mit stärkeren Krümmungen oder Kanten zu der Beschädigung der Oberfläche führen da erstens ein Rezept ohne entsprechende Anpassung an die veränderte Oberflächenform angewandt wird und zweitens an Formmerkmalen wie z.B. Kanten und Spalten andere Rezepte angewandt würden als an der Stelle wo der Defekt ursprünglich vermessen/vermutet wurde - und andersrum. Aufgrund der initialen Ungenauigkeit kann es auch sein, dass der Defekt auf der falschen Seite eines Merkmals (wie eines Spalt oder einer Kante) detektiert wurde, so dass bei der Bearbeitung ein signifikant anderes (falsches) Rezept an einem anderem (falschen) Ort mit gegensätzlicher (falscher) Verformung oder Verschiebung in Relation zu dem Merkmal ausgeführt wird, oder dass die Bearbeitung auf einer anderen Komponente des Bauteils stattfindet als der Defekt tatsächlich liegt.

Des Weiteren kann eine reine Offsetverschiebung zur Korrektur der Position zu einer Kollision des Roboters oder des Werkzeugs mit dem Bauteil, mit Teilen der Umgebung oder mit anderen Robotern oder Werkzeugen führen. Des Weiteren wird mit dieser Herangehensweise nicht verhindert, dass Defekte, welche aufgrund der weniger akkuraten Inspektion, z.B. im Lichttunnel, als gerade noch als "zu bearbeiten" klassifiziert wurden, aber bei genauerer Inspektion (als zu groß, zu klein, etc. falscher Typ) und als "nicht zu bearbeiten" klassifiziert würden, unnötig bearbeitet werden. Des Weiteren wird nicht verhindert, dass Defekte welche aufgrund der weniger akkuraten Inspektion gerade noch als "nicht zu bearbeiten" klassifiziert wurden, aber bei genauerer Inspektion als "zu bearbeiten" klassifiziert würden, fälschlicherweise unbearbeitet bleiben.

### ÜBERBLICK

Als platz- und kostensparende Alternative wird vorgeschlagen, die Roboter, welche die Bearbeitung der gefundenen Defekte übernehmen, zusätzlich zum Bearbeitungswerkzeug mit einem kompakten Inspektionssensor auszustatten und auf Basis der Defektlisten (z.B. aufgrund der Inspektion im Lichttunnel) nicht nur die Reparatur der Defekte zu planen sondern auch eine vorhergehende Nachvermessung/Nachinspektion der Defekte.

Im Folgenden bezeichnet "online" einen in der Bearbeitungszelle durchgeführten Vorgang, "inline" einen zwischen Inspektion und Bearbeitungszelle durchgeführten Vorgang. Ein "Teilplan" ist ein Abschnitt eines Planes z.B. lediglich zur Reparatur eines individuellen Defektes. Ein "Plan" ist die Verknüpfung von Teilplänen und Zwischenbewegungen / Neuinspektion (lokale, genauerere Inspektion einer zuvor durchgeführten Inspektion gefundenen Defektes). Aus einem Plan folgt unmittelbar das (Roboter-) Programm.

Die hier beschriebenen Beispiel betreffen ein Verfahren zur Roboterbahnplanung zum Zwecke der Durchführung einer robotergestützten Reparatur von Oberflächendefekten beschrieben (*Spot Repair*). Gemäß einem Beispiel umfasst das Verfahren folgendes: das Durchführen einer ersten optischen Inspektion eines Werkstücks mittels eines oder mehrerer ersten Sensoren; das Detektieren von Defekten auf der Oberfläche des Werkstücks und Ermitteln von ersten Defektdaten, die die detektierten Defekte charakterisieren, basierend auf Messdaten, die bei der ersten optischen Inspektion gemessen wurden; das Durchführen - für mindestens einen Defekt der detektierten Defekte und basierend auf den zugehörigen ersten Defektdaten - einer automatischen, computergestützten ersten Roboterbahnplanung zur Ermittlung einer Roboterbahn für eine zweite Inspektion des Werkstücks im Bereich um den mindestens einen Defekt und zur Ermittlung einer oder mehrerer Roboterbahnen zur Bearbeitung des mindestens einen Defekts; das Durchführen der zweiten optischen Inspektion des Werkstücks mittels eines oder mehrere robotergeführten, zweiten Sensoren und Ermitteln von zweiten Defektdaten, die den mindestens einen Defekt charakterisieren, basierend auf Messdaten, die bei der zweiten optischen Inspektion gemessen wurden; das Prüfen - basierend auf den zweiten Defektdaten - ob der mindestens eine Defekt mit einer ersten der geplanten Roboterbahnen oder - sofern vorhanden - einer anderen der geplanten Roboterbahnen bearbeitet werden kann, und, falls ja, automatisches, robotergestütztes Bearbeiten des mindestens einen Defekts unter Verwendung der jeweiligen Roboterbahn; falls der mindestens eine Defekt nicht mit einer der geplanten Roboterbahnen bearbeitet werden kann: Durchführen einer zweiten Roboterbahnplanung zur Ermittlung einer neuen Roboterbahn zur Bearbeitung des mindestens einen Defekt basierend auf den jeweiligen zweiten Defektdaten, und automatisches, robotergestütztes Bearbeiten des mindestens einen Defekts unter Verwendung der neuen Roboterbahn.

In einem Ausführungsbeispiel wird wie folgt vorgegegangen, um Defekte auf der Oberfläche eines Werkstücks automatisiert zu erkennen und mittels Roboter zu bearbeiten (*Spot Repair*). Zunächst wid eine einer erste optische Inspektion eines Werkstücks mittels eines oder mehrerer ersten Sensoren dorchgeführt. Diese (ersten) Sensoren können eine verglecihsweise geringe Genauigkeit aufweisen. Es folgt das Detektieren von Defekten auf der Oberfläche des Werkstücks und das Ermitteln von ersten Defektdaten, die die detektierten Defekte charakterisieren, basierend auf Messdaten, die bei der ersten optischen Inspektion gemessen wurden. Die Defektdaten können die Position eines Defekts auf der Werkstückoberfläche (Defektkoordinaten) sowie die gemessenen Ausprägung (z.B. Größe, Typ) eines Defekts beinhalten. Anschließend wird - für mindestens einen Defekt der detektierten Defekte und basierend auf den zugehörigen ersten Defektdaten - eine automatische, computergestützte ersten Roboterbahnplanung durchgeführt zur Ermittlung einer Roboterbahn für eine zweite Inspektion des Werkstücks im Bereich um den mindestens einen Defekt sowie zur Ermittlung einer oder mehrerer Roboterbahnen zur Bearbeitung des mindestens einen Defekts. Es folgt die Durchführen der zweiten optischen Inspektion des Werkstücks mittels eines oder mehrerer robotergeführten, zweiten Sensoren und das Ermitteln von zweiten Defektdaten, die den jeweiligen Defekt charakterisieren, basierend auf Messdaten, die bei der zweiten optischen Inspektion gemessen wurden. Die für die zweite Inspektion verwendeten Sensoren weisen eine vergleichsweise hohe Genauigkeit auf, weshalb die zweiten DEfektdaten mit kleinerer Unsicherheit behaftet sind. Basierend auf den zweiten Defektdaten wird geprüft, ob der mindestens eine Defekt mit einer ersten der geplanten Roboterbahnen oder - sofern vorhanden - einer anderen der geplanten Roboterbahnen bearbeitet werden kann. Falls ja, wird die automatische, robotergestützte Bearbeitung des mindestens einen Defekts unter Verwendung der jeweiligen Roboterbahn durgeführt. Im Fall, das der mindestens eine Defekt nicht mit einer der geplanten Roboterbahnen bearbeitet werden kann, wird eine zweite Roboterbahnplanung zur Ermittlung einer neuen Roboterbahn zur Bearbeitung des jeweiligen Defekts basierend auf den jeweiligen zweiten Defektdaten durchgeführt. Das automatische, robotergestützte Bearbeiten des jeweiligen Defekts erfolgt dan unter Verwendung der neuen Roboterbahn.

Die initiale im Lichttunnel oder mit ungenaueren, platz- und kostensparenden Methoden durchgeführte Inspektion zur Ermittlung von Defekten, wird erweitert um eine statisch festgelegte, oder bei der Vermessung individuell ermittelte, erwartete Unsicherheit in der ermittelten Position des Defekts auf dem Bauteil. Die Beschreibung der Defekte des Bauteils (oben als Defektdaten bzeichnet), z.B. in einer Liste, wird erweitert um diese Abweichung.

Die erwähnte erste Roboterbahnplanung umfasst in einem Ausführungsbeispiel das Planen einer Roboterbahn basierend auf den ersten Defektdaten (d.h. basierend auf den Messdaten aus der ersten Inspektion) sowie das Planen weiterer Roboterbahnen für vershiedene modifizierte (erste) Defektdaten. Insbesondere können modifizierte Defektdaten modifizierte Defektpositionen enthalten. D.h. der betreffennde Defekt wird (einen Messfehler bei der ersten Inspektion antizipierend) "virtuell" verschoben, um die moridifizierten Defektdaten zu erhalten. Auf diese Weise können eine Vielzahl modifizierter Defektdaten berechnet werden, jeweils für eine modifizierte Defektposition, insbesondere in dem Bereich der erwarteten Unsicherheit um die ursprünglich gemessene Defektposition.

In einem anderen Ausführungsbeispiel werden auch Defekte als "zu bearbeiten" in die Liste mit aufgenommen, welche aufgrund ihrer in der initiale Inspektion ermittelten Klasse, Ausprägung oder Parameter, als grenzwertig "nicht zu bearbeiten" ermittelt wurden. In einer späteren Inspektion könnten diese Bereiche noch einmal, feiner inspiziert werden, und es kann somit erneut über diese Defekte entschieden werden.

Nach der ersten (initialen) Inspektion wird für diese Liste der Defekte deren Bearbeitung initial geplant. In der initialen Planung der Bearbeitung wird jedoch zusätzlich zur eigentlichen Reparatur eine vorangestellte Neuinspektion geplant. Diese wird für den Bereich des Bauteils um den jeweiligen Defekt geplant welcher mindestens die erwartete Abweichung oder Ungenauigkeit des Defekts in seiner Lage und die größte zu erwartende Größe des Defekts beinhaltet. In anderen Worten, es wird die kombinierte Fläche ermittelt, welche gebildet wird aus den möglichen Positionen eines Defekts und den je nach optischen Eigenschaften (Strahlengängen) resultierenden eingenommen Flächen des jeweiligen Defekts.

Die initiale (in-line) Planung einer geeigneten Reparaturstrategie kann, gemäß einem Ausführungbeispiel, auf demRezept basieren, das zu dem initial detektierten und charakterisierten Defekt passt, d.h. aus der ermittelte Position, Klasse und Ausprägung des jeweiligen Defekts resultiert das bei der Bahnplanung verwendete Rezept. Im Zuge der initialen Roboterbahnplanung kann, gemäß einem Ausfphrungbeispiel, auch (z.B. über Bearbeitungssimulation, Heuristik oder maschinelles Lernen) jener Flächenbereich ermittelt werden, in dem sich der wahre Defekt tatsächlich befinden kann, um mit dem unverändert angewandten Rezept zufriedenstellend bearbeitet zu werden. D.h. es werden die Abweichungen zwischen dem wahren Defekt (oder genau inspiziertem Defekt) und dem ungenau detektierten Defekt ermittelt, bei denen der Defekt ohne spätere Anpassung des Rezepts mit dem geplanten Programm bearbeitet werden könnte. In einem Ausführungsbeispiel wird diese Fläche, bzw. die Abweichungen, durch "Sampling" der Fläche um den initial ermittelten Defekt überprüft, indem die Bearbeitung eines Defekts eines jeden Samples (d.h. mit virtuell verschobener Defektposition) mit der für den initialen Defekt geplanten Bearbeitung simuliert wird. Die Samples, für welche die Bearbeitung mit dem ursprünglichen Teil-Plan als "in Ordnung" simuliert wurde, werden in einer "Gruppe 1" zusammengefasst. In einer vorteilhaften Implementierung wird die Größe des gesampelten Bereichs bestimmt durch die individuell ermittelte, erwartete Unsicherheit in der ermittelten Position des Defekts.

Die Defektdaten können aus Parametersatz betrachtet werden. Durch das erwähnte Sampling werden mögliche Messfehler bei der ersten (ungenauen) Inspektion antizipiert. Der gemessene Parametersatz ist nur ein möglicher Parametersatz, der den jeweiligen Defekt beschreibt. Aufgund der ungenauen Messung ist der gemessene Parametersatz, der einen bestimmten Defekt charakterisiert, mit einer Unsicherheit behaftet. Dieser Unsicherheitsbereich kann (in verschiedener Weise) diskretisiert werden, und jeder Punkt in dem Zustandsraum aller möglichen Parametersätze ist ein "Sample", d.h. ein modifizierter Parametersatz (modifizierte Defektdaten), der den realen Defekt ebenfalls beschreiben könnte. Insbesondere werden die Samples gebildet durch Modifizieren der ursprünglich gemessenen Defektposition.

In einer weiteren Variante wird alternativ oder zusätzlich in der initialen Planung ermittelt (z.B. mittels Simulation) wie weit ein Defekt von dem initial ermittelten Fehlerort entfernt liegen kann, damit eine einfache Transformation des Roboterprogramms, welches für Fehler am ursprünglichen Fehlerort geplant wurde, noch ausreicht, um den Defekt an seiner echten Position oder später genauer ermittelten Position zu reparieren ohne die Oberfläche des Bauteils zu beschädigen (Defekte der "Gruppe 2"). Das heißt, simuliert wird allein ein später in der Robotersteuerung während der Bearbeitung aufrufbarer Offset (üblicherweise nur in x,y,z-Koordinaten) ohne eine intelligente Neuplanung der Roboterbahn zur Reparatur des betreffenden Defekts. In anderen Worten, die "Neuplanung" der Roboterbahn reduziert sich auf die Modifikation (z.B. durch Anwenden eines Offsets auf den Tool-Center-Point, TCP) einer bereits geplanten Roboterbahn. Dazu wird vorzugsweise wieder die Oberfläche um den Defekt herum abgetastet (Sampling), zur Bestimmung möglicher alternativer Defektpositionen, wobei jedes Sample eine anderer Defektposition repräsentiert (mit entsprechend geänderten Defektdaten). In einer vorteilhaften Realisierung wird diese Überprüfung durch eine Kollisionsüberprüfung der verschobenen Roboter-Bewegung und einer Simulation (Prozesssimulation) des bearbeiteten Bereichs ermittelt. Ergibt die Simulation, dass ein Defekt am Ort des Samples mit einem um einen Offset verschobenen Teil-Plan oder Roboterprogramm zufriedenstellend (i.O.) repariert würde, dann wird dieses Sample der "Gruppe 2" zugeordnet. Alternativ kann dies bei sehr kurzen erforderlichen Planungszeiten durch eine einfache Krümmungsanalyse der Oberfläche um den Defekt anstelle der Bearbeitungssimulation und/oder durch Verwendung größerer Kollisionsmodelle für Werkzeuge und Roboter und eine zusätzliche Einschränkung der erlaubten Achsbereiche des Roboters für die Simulation der Bewegung an der ursprünglichen Stelle anstelle einer neuen Kollisionsprüfung an den möglichen realen Stellen geprüft werden.

Gemäß dem hier vorgestellten Konzept wird eine erste optische Inspektion mit (einem onder mehreren) vergleichsweise ungenauen und kostengünstigen Sensoren durchgeführt und es werden bei der ersten Roboterbahnplanung bereits potentiell mögliche Messfehler antizipiert, indem nicht nur für den tatsächlich detektierten Defekt eine Roboterbahn geplant wird (also basierend auf den gemessenen Defektdaten), sondern auch modifizierte Defekte (und Defektdaten) betrachtet werden. Alle diese modifizierten Defekte bzw. die diesen zugeordneten Defektdaten könnten - theoretisch unter der Annahme eines zufälligen Messfehlers - zu denselben Messdaten führen. Die Bahnplanung basierend auf den modifizierten Defektdaten kann vereinfacht werden, indem geprüft wird, ob eine bereits geplante Roboterbahn wiederverwendet werden kann (Gruppe 1), ggf. unter Anwendung eines TCP-Offsets (Gruppe 2). Bei der später stattfindenden zweiten Inspektion mit signifikant genaueren, robotergeführten Sensoren, ist jeder der zuvor antizipativ ermittelten modifizierten Defekte (bzw. the zugehörigen modifizierten Defektdaten) ein möglcihes Messergebnis.

Samples welche weder der Gruppe 1 noch der Gruppe 2 zugeordnet werden konnten, d.h. mögliche alternative Defektpositionen (Samples / modifizierte Defekte), welche laut Simulation weder mit dem initial geplanten (unveränderten) Roboterprogramm, noch mit dem um einen Offset verschoben ausgeführten Roboterprogramm zufriedenstellend (i.O.) repariert werden können, werden der "Gruppe 3" zugeordnet. Defekte welche bei der späteren online Neuinspektion dieser Gruppe zugeordnete werden, werden je nach Realisierung entweder übersprungen oder es wird für diese Defekte der Gruppe 3 online eine neue Bahnplanung durchgeführt und anschließend bearbeitet. In einem anderen Ausführungsbeispiel wird für die Defekte der Gruppe 3 antizipativ (sozusagen auf Vorrat) eine zusätzliche Roboterbahn geplant, was in diesem Fall nicht durch einfaches Anwenden eines Offsets möglich und daher entsprechend aufwändiger ist (und mehr Rechenzeit (bis zu mehreren Minuten) in Anspruch nehmen kann).

In einer vorteilhaften Realisierung wird für jedes Samples der Gruppe 3 die Reparatur eines Defektes an der Position des Samples initial geplant. D.h. es wird für jedes Sample der Gruppe 3 individuell das anwendbare Rezept ermittelt, dessen Aufbringen auf die Oberfläche, Verformung oder Verschiebung, sowie die Roboterbewegungen geplant.

In einer alternativen, rechenaufwändigeren aber in Bezug auf Robustheit und Prozessergebnis besseren Ausführung wird nicht nur eine mögliche Reparatur für den Defekt an der ursprünglich detektierte Lage und für die ursprünglich detektierte Defekt-Klasse geplant und anschließend Änderungen in der Defektposition analysiert, sondern es wird parallel die Reparatur für verschiedene mögliche Defektpositionen (Samples) geplant und für die spätere online Verwendung gespeichert. Für die Ermittlung wird wieder der Unsicherheitsbereich um den initial detektierten Defekt abgetastet, gleichmäßig oder abhängig von der lokalen Krümmung.

In einer vorteilhaften Ausführung wird diese initiale Planung der Reparatur nicht nur für alle möglichen Variationen der Position des initial detektierten Defektes geplant (d.h. für die geometrisch abgetastete Oberfläche) sondern zusätzlich für alle gemäß der initialen Inspektion möglichen oder wahrscheinlichen Defektklassen und Ausprägungen des Defektes. D.h. die initiale Planung antizipiert nicht nur, dass eine spätere Neuinspektion die Position des Fehlers auf der Oberfläche korrigiert, sondern auch dessen Klasse, Ausprägung und Parameter. In dieser Ausführung repräsentiert ein Sample die Kombination der möglichen Variationen in der Position des Defektes sowie in der Variation dessen Klasse, Ausprägung und Parameter. Damit werden mehrere bzw. viele alternative Bearbeitungen initial geplant und als alternative Teil-pläne gespeichert mit Verweis auf die ihnen zugrundeliegenden Samples, welche jeweils eine spezielle Kombination von Position, Klasse und Ausprägung einer Variation des initial detektierten Defektes repräsentieren.

Insbesondere nahe an Kanten und Spalten, z.B. Türspalten, etc. (allgemein als "Merkmale" bezeichnet) kann es dazu kommen, dass die Samples (diese alternativ abgetasteten Defekte) auf der anderen Seite eines Merkmals liegen und die Reparatur für die jeweilige Position des Samples geplant wird. Insbesondere werden dort auch abhängig vom Abstand zu den Merkmalen oder der Lage (Seite) zu den Merkmalen andere Rezepte ausgewählt und z.B. wenn ein alternativer Defekt auf der entgegengesetzten Seite eines Merkmals liegt als der ursprünglich inspizierte, dass dann die Bearbeitungsmuster entgegengesetzt modifiziert werden oder hin/weg vom Oberflächenmerkmal verschoben oder deformiert werden, so dass die Bearbeitung komplett unterschiedlich ist. Ebenso können alternative Defekte bzw. deren Samples außerhalb oder innerhalb des Bereiches liegen, in dem ein Merkmal für eine Bearbeitung relevant ist, so dass unterschiedliche Bearbeitungsrezepte für die alternativen Teilpläne ausgewählt werden. Ebenso wird je nach Abstand und relativer Lage der simulierten/abgetasteten Defekte von dem Merkmal bzw. den Merkmalen oder abhängig von der Oberflächenform des Bauteils in der Nähe des Defekts eine bzw. keine Verschiebung oder Deformation entlang oder hin/weg vom Merkmal erfolgen oder eine geringere bzw. größere Verschiebung oder Deformation der Werkzeugbahn bzw. - Pfades oder eine Verschiebung oder Deformation des Pfades in eine andere Richtung.

Bei Oberflächen mit stärkeren Krümmungen wird mindestens die intitial geplante Bewegung, die Orientierung der Werkzeuge bei der Bearbeitung und die Anfahrt signifikant unterschiedlich zu dem initialen Teil-Plan für die Bearbeitung des initial gemessenen Defekts ausfallen, und in den verschiedenen initialen Teil-plänen für verschiedene Samples kann der Roboter oft eine komplett unterschiedliche Konfiguration, bzw. ggf. unterschiedliche Konfiguration seiner Zusatzachsen einnehmen. Derartige Korrekturen der Information über den initial inspizierten Defekt wären mit der Anwendung eines einfachen Offset nicht bearbeitbar.

Der für das Sampling abzutastende Bereich und die Abtastung können vordefiniert, (mittels maschinellem Lernen) gelernt oder aus der Information des Sensors abgeleitet werden.

In einer alternativen, Taktzeit- und Speicherplatz sparenden Ausführung wird über alle Samples ermittelt, ob die diesen zugeordneten Teilpläne zur Reparatur die gleichen Rezepte und ähnliche Werkzeugbahnen und ähnliche Roboterkonfigurationen verwenden und zusammengefasst werden könnten, so dass alle möglichen Variationen des Defekts mit einem "gemittelten" Programm (Roboterbahn) bearbeitet werden könnten und die Neuinspektion entfallen kann.

In einer vorteilhaften Ausführung wird über alle Samples aus den möglichen Konfigurationen des Roboters für die ursprünglichen und die alternativen gesampelten Defekte eine Schnittmenge bestimmt für welche sich die meisten bzw. wahrscheinlichsten Defekte mit kurzen und sicheren Roboter-Bewegungen erreichen lassen. In einer Variation wird ein Mittelwert der Schnittmenge der Konfigurationen verwendet.

In einer vorteilhaften Ausführung beginnen die alternativen, parallel geplanten Bearbeitungen an der gleichen Ausgangsituation (der verfeinerten Inspektion des Defektes) und enden mit derselben Roboterkonfiguration oder einer ähnlichen Konfiguration welche es erlaubt leicht und sicher in die anschließende Bewegung zum nächsten Defekt oder zum Ende zu planen bzw. zu überschleifen.

Für die Generierung eines Plans oder mehrerer Pläne je Roboter aus den einzelnen Teilplänen zur Reparatur und ggf. vorheriger Neuinspektion der einzelnen Defekte wird für diese eine Reihenfolge bestimmt, und die kollisionsfreien Zwischenbewegungen der Roboter geplant. Für den Fall, dass mehr Defekte pro Roboter zu reparieren sind als in einer ggf. vorgegeben maximalen Taktzeit repariert werden können, werden die zu bearbeitenden oder die nicht zu bearbeitenden Defekte ausgewählt.

In einer sehr einfachen Realisierung, bei der nur der eingangs erwähnte Offset auf die geplante Roboterbewegung angewandt wird ohne die Auswirkungen möglicher Variationen der Defekte in der initialen Planung zu antizipieren geschieht diese Auswahl der Defekte welche nicht bereits als "nicht bearbeitbar" verworfen wurden z.B. anhand der Fehlerklasse oder Ausprägung oder der ermittelten Bearbeitungszeit des Defekts inkl. oder geometrischer Kriterien oder aufsummierte Bearbeitungszeit oder per Zufallszahlengenerator.

In einem Beispiel werden die Bereiche um die Defekte gesampelt, und anschließend wird je Sample die Reparatur mittels (hypothetischer) Anwendung des Originalprogramms (ggf. mit Offset) simuliert oder für jedes Sample eine individueller Teilplan geplant. Dabei werden die Ergebnisse des Samplings in der Auswahl der zu reparierenden Defekte mit einbezogen. Für eine optimierte Taktzeit werden jene Defekte bevorzugt, welche gemäß initialer Simulation keine Neuinspektion der Defekte erfordern und im gesamten Bereich der Unsicherheit des ermittelten Defektes mit unverändertem Programm bearbeitet werden können. Weitere positive Kriterien zur Auswahl der Defekte, welche neu inspiziert werden müssen, sind: (1.) geringste Anzahl bzw. prozentualen Anteil der Samples welche nicht bearbeitet werden können, d.h. der höchsten Wahrscheinlichkeit einer späteren erfolgreichen Bearbeitung, (2.) höchste Anzahl an Samples welche entweder mittels Originalprogramm oder mittels Originalprogramm mit angewandtem Offset, respektive mit der geringsten Wahrscheinlichkeit einer erforderlichen Neuplanung bearbeitet werden können. Für alle Samples eines Defekte für welche die Reparatur individuell geplant wurde, wird die ermittelte Reparaturzeit je Sample gewichtet mit der Wahrscheinlichkeit dass dieses Sample der Neuvermessung entspricht, z.B. als indirekt proportional zur Distanz des Samples von der initial gemessenen Defektposition angenommen oder entsprechend einer Gaußverteilung. Die resultierende durchschnittliche Reparaturzeit der Defekte kann ebenfalls als (drittes) Kriterium verwendet werden.

Die Zwischenbewegungen zwischen der Bearbeitung der eines gefundenen Defekts bzw. den parallel geplanten alternativen Bearbeitung des Defekts und den nächsten Defekten wird als "Air-motion" geplant bis die Bearbeitung und ihrer vorherige genauere Inspektion / Nachvermessung für alle initial gefundenen Defekte durchgeführt ist.

Wenn bei der initialen Planung ermittelt wird, dass innerhalb der zu erwartenden Ungenauigkeit des initialen Defekts, der Defekt immer sicher mit dem "unadaptierten" ursprünglichen Reparaturprogramm bearbeitet werden kann, so dass keine Alternativen erforderlich sind, dann entfällt der Bedarf für eine Inspektion und diese kann in der Planung ausgelassen werden. Das heißt, bei der späteren Ausführung wird die nachträgliche Inspektion übersprungen, um Taktzeit zu sparen ohne dass damit relevante Einbußen der Qualität einhergehen.

Die Roboterprogramme werden für die verschiedenen Roboter mit Befehlen erzeugt. Alternativ kann auch nur der Plan gespeichert und später verwendet werden, wobei z.B. Bewegungsbefehle und Befehle für die Sensoren und Werkzeuge schrittweise/einzeln in Echtzeit in die Roboter eingespielt werden.

Während der Abarbeitung eines Roboterprogramms fährt der jeweilige Roboter gemäß der initial geplanten Bewegung (der Roboterprogramme) für den Fall, dass keine Anpassung des Defekts erforderlich ist, zu der Ausgangsposition der jeweiligen DefektBearbeitung und arbeitet diese ohne Modifikation ab. Eine Inspektion wird in diesem Fall nicht durchgeführt. Für den Fall, dass die initiale Planung ergeben hat, dass der Defekt nicht an einem vorteilhaften Ort liegt, d.h. eine Modifikation der ursprünglich geplanten Defektbearbeitung nötig sein kann, fährt der Roboter an die jeweils erste Inspektionsposition und führt die Inspektion durch. Das Ergebnis der Neuvermessung/Inspektion kann wie folgt verwendet werden.

In jenen Ausführungsbeispielen, in denen mehrere Alternativen geplant wurden, wird die am besten passende Alternative gewählt und der Plan / das entsprechende Roboterprogramm abgearbeitet. Dies geschieht, indem die Eigenschaften der inline bestimmten Samples (Position, ggf. Defektklasse, Ausprägung, Parameter) mit den Eigenschaften des online neu inspizierten Defektes verglichen werden und das ähnlichste Sample ermittelt wird. Der Teilplan oder das Teilprogramm zur Reparatur, welches diesem Sample zugeordnet ist, wird dann mit dem Roboter ausgeführt.

In manchen Ausführungsbeispielen wird geprüft, ob der neu inspizierte Defekt (oder dessen Abweichung vom initial inspizierten Defekt) in dem inline als stabil ermittelten / simulierten Bereich (Ort und Klasse, Ausprägung) liegt (Gruppe 1). In diesem Fall wird das ursprüngliche Programm abgearbeitet.

Für den Fall, dass der Defekt außerhalb des zuvor ermittelten Bereichs liegt (Gruppe 3), muss die Bearbeitung für die genaue Position des Defekts online neu geplant werden (in Beispielen ohne Vorab-Planung mehrerer Alternativen). Dazu wird die Planung vorteilhafterweise nur für die Bewegung von der Inspektionsposition bis zur vorab bestimmten Endposition der ursprünglich geplanten Bearbeitung des ursprünglich ermittelten Defekts durchgeführt. Alternativ kann die Planung von der Inspektionsposition bis zum Start der Inspektion oder Bearbeitung des nächsten Defekts durchgeführt werden. Im Fall, dass der Defekt der letzte abzuarbeitende Defekt im Programm oder Teilprogramm ist, kann die Planung bis zur Endstellung des Roboters im Programm durchgeführt werden.

In einer weiteren Realisierung kann simuliert werden, wie weit der ursprünglich (ungenau) detektierte Defekt zusammen mit dem ursprünglichen Bearbeitungsprogramm verschoben werden kann (Gruppe2), d.h. online durch einen einfachen Offset das gesamte Bearbeitungsprogramm verschoben und ausgeführt werden kann, ohne die Oberfläche oder Oberflächenmerkmale zu beschädigen, den Defekt nicht mehr mit der erforderlichen Qualität zu bearbeiten oder mit dem Bauteil oder sonstigen Komponenten in der Roboter-Zelle zu kollidieren. D.h. es wird z.B. ermittelt, für welche Samples der Oberfläche im Unsicherheitsbereich um den inline inspizierten Defekt keine Notwendigkeit einer Neuplanung bzw. geplanten Anpassung, oder Auswahl eines alternativen Plans erforderlich ist (Gruppe 2).

In einer vorteilhaften Realisierung erfolgt dies über Simulation der Verschiebung und Simulation des Prozesses und Kollisionsüberprüfung in der initialen Planung.In einem Ausführungsbeispiel, das weniger rechenzeitintensiv ist, erfolgt dies durch eine einfache Analyse der Krümmung der Oberfläche: Bei fast ebenen Flächen und Verschiebungen von wenigen Millimetern ist mit wenig Problemen zu rechnen. Die Kollisionsfreiheit kann dabei neu simuliert werden. Alternativ kann bereits bei der inline Planung für den ursprünglichen Defekt mit vergrößerten Kollisionsmodellen und künstlich weiter eingeschränkten Bewegungsbereichen für die Roboterachsen geplant und simuliert werden, so dass eine später gegebenenfalls verschobene/offsettierte Ausführung mit den originalen Kollisionsmodellen und Achswinkel innerhalb der erweiterten Kollisionsmodelle und innerhalb der echten Achsbeschränkungen liegt und nicht eigens geprüft werden muss.

Durch die Montage des Sensors auf dem Werkzeug kann in einem alternativen Ausführungsbeispiel nach der Bearbeitung der Defekt neu inspiziert und ggf. noch einmal bearbeitet werden, sofern die erste Bearbeitung nicht vollständig erfolgreich war. Wenn die Bearbeitung nicht punktgenau war, kann eine neue Bahnplanung durchgeführt werden oder ein alternative Plan aufgerufen und ausgeführt werden.

In einem alternativen Ausführungsbeispiel, welches weniger Rechenleistung und ggf. Vorlaufzeit zwischen initialer Inspektion und Reparatur erfordert, aber bezüglich Ausführungszeit weniger optimal ist, wird inline initial nur der Teilplan für den initial inspizierten Defekt geplant - ohne Alternativen und ohne Überprüfung von Variationen (Samples). In dieser Variante muss online in jedem Fall neu inspiziert werden. Mit dem Ergebnis der Neuinspektion wird online reaktiv die Reparatur neu geplant für die aktualisierte Information über den Defekt. Während der Planungszeit wartet der Roboter am Inspektionspunkt (oder bewegt sich langsam auf die initial geplante Bearbeitung zu). In einer Variante dieser Realisierung wird zur Reduzierung der dafür nötigen Rechenzeit/Wartezeit parallel zur Neuplanung simuliert, ob entweder bereits das ursprüngliche inline geplante TeilProgramm zur Reparatur des neu inspizierten Defektes hinreichend ist, oder ob eine Offsetverschiebung des Programms hinreichend ist. Für das als erstes berechnete/verfügbare Ergebnis (ohne Offset, mit Offset oder neu geplant), welches ein hinreichendes Resultat vorhersagt, wird der Teilplan bzw. das Teilprogramm für die Bearbeitung mit dem Roboter verwendet.

### KURZE BESCHREIBUNG DER ABBILDUNGEN

Verschiedene Implementierungen werden nachfolgend anhand von den in den Abbildungen dargestellten Beispielen näher erläutert. Die Darstellungen sind nicht zwangsläufig maßstabsgetreu und die Erfindung beschränkt sich nicht nur auf die dargestellten Aspekte. Vielmehr wird Wert daraufgelegt, die den dargestellten Ausführungsbeispielen zugrunde liegenden Prinzipien darzustellen.
Fig. 1 illustriert exemplarisch das an sich bekannte Konzept der Reparatur von Defekten mit vorgelagerter und ausreichend genauer Inspektion.
Fig. 2 illustriert exemplarisch die Reparatur von Defekten mit vorgelagerter ungenauer Inspektion.
Fig. 3 illustriert exemplarisch die Reparatur von Defekten mit vorgelagerter ungenauer Inspektion und mehreren sequentiell angeordneten Bearbeitungszellen.
Fig. 4 gibt einen Überblick über alle verschiedenen vorgestellten Varianten der Inline-Planung der Inspektion und Bearbeitung der Defekte anhand eines Flussdiagrams, das den Daten-/Signalfluss visualisiert.
Fig. 5 zeigt eine einfache Implementierung der computergestützten Inline-Planung einer Roboterbahn für einen Defekt.
Fig. 6 illustriert die Planung von Roboterbahnen für die reaktive Bearbeitung mit Antizipieren der Reaktion auf spätere Positionsabweichungen, die sich aus der nachfolgenden Neuinspektion der Defekte ergeben.
Fig. 7 zeigt das Planen von reaktiver Bearbeitung mit Antizipieren der Reaktion auf spätere Positionsabweichungen und Änderungen in der Klassifikation oder bestimmen Ausprägung eines Defekts während der Neuinspektion.
Fig. 8 illustriert das Online-Adaptieren, d.h. das reaktive Neuplanen.
Fig. 9-12 betrifft Varianten / Modifikationen des Beispiels aus fig. 8
Fig. 13 ist Flussdiagramm betreffend ein allgemeines Ausführungsbeispiel.

### DETAILLIERTE BESCHREIBUNG

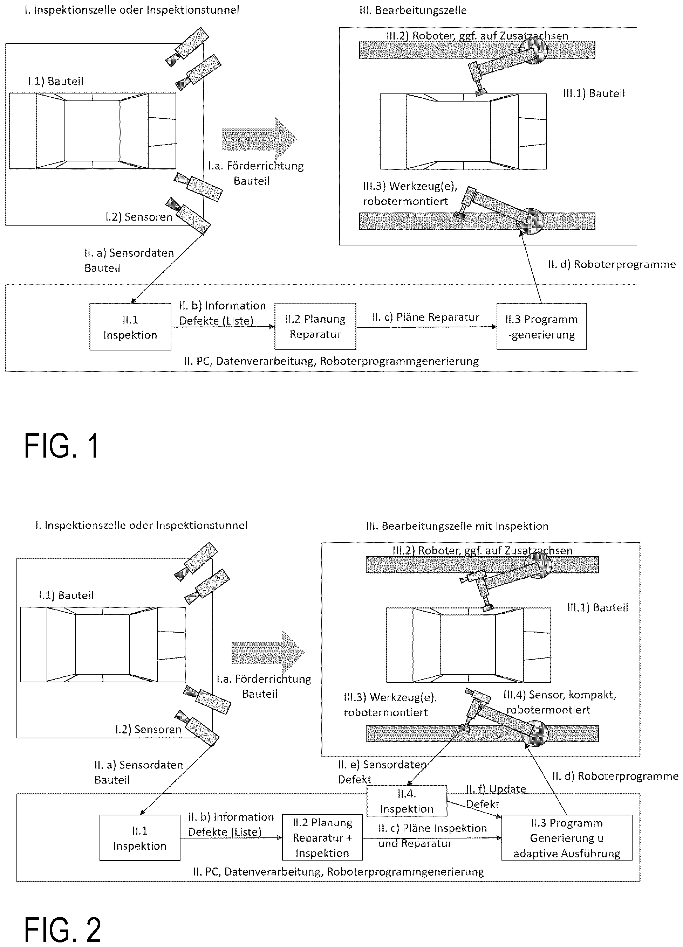

Fig. 1 illustriert exemplarisch das an sich bekannte Konzept der Reparatur von Defekten mit vorgelagerter und ausreichend genauer Inspektion, mittels der Defekte auf der Oberfläche des Bauteils (Werkstücks) detektiert (d.h. auf dem Bauteil als solche erkannt und lokalisiert) und charakterisiert (d.h. einer Defekt-Klasse zugeordnet, mittels Parameter beschrieben, etc.) werden.

In der ersten Roboterzelle (links in Fig. 1) bewegt sich das das Bauteil z.B. durch einen Kameratunnel oder wird von robotergeführten Sensoren inspiziert. Basierend auf dem Ergebnis dieser Inspektion wird die Reparatur (*Sport Repair*) der detektierten Defekte (oder eines Teils der Defekte) geplant. Bei Einfahrt in die Bearbeitungszelle wird vorzugsweise die Lage des Bauteils (relative zur Roboterzelle) bestimmt und die Roboter-Programme zur automatischen Bearbeitung der Defekte werden erstellt und ausgeführt.

In Fig. 1 bezeichnet das Modul I. die Inspektionszelle oder den Inspektionstunnel. Dabei bezeichnet das Bezugszeichen 1.1 das Bauteil welches zu inspizieren und anschließend zu reparieren ist. Bezugszeichen 1.2 bezeichnet Sensoren für die Inspektion des Bauteils.

Das Modul II bezeichnet die Datenverarbeitung und Roboterbahnplanung. Dabei bezeichnet das Bezugszeichen II.1 die Inspektionssoftware zur Erkennung und Klassifizierung der Defekte auf dem Bauteil. Das Bezugszeichen 11.2 bezeichnet die Roboterbahnplanung für die Reparatur der gefunden Defekte. Bezugszeichen 11.3 bezeichnet die Generierung der Roboterprogramme.

Das Modul III bezeichnet die Roboterzelle für die Bearbeitung der Defekte (Spot Repair). Dabei bezeichnet das Bezugszeichen 111. 1 das zu bearbeitende Bauteil. Das Bezugszeichen 111.2 bezeichnet die Roboter für die Bearbeitung, optional mit Zusatzachsen, und Bezugszeichen 111.3 bezeichnet Werkzeuge zur Bearbeitung der gefundenen Defekte.

Fig. 1 illustriert den Datenfluss (Bezugszeichen II.a bis II.d) zwischen den einzelnen Modulen. Bezugszeichen I.a bezeichnet die Förderrichtung der Bauteils, Bezugszeichen 11.a die Sensordaten, die von den Inspektionskameras geliefert werden. Bezugszeichen II.b illustriert die Liste der detektierten Defekte und II.c die resultierenden Bahnpläne für die einzelnen Roboter zur Reparatur der gefundenen Defekte. Bezugszeichen II.d bezeichnet die aus den Bahnplänen automatisch generierten Roboterprogramme.

Fig. 2 illustriert - anhand eines Diagrams - exemplarisch das hier beschriebene Konzept zur Reparatur von Defekten mit vorgelagerter ungenauer Inspektion, mit der Defekte zwar detektiert (d.h. als solche identifiziert und lokalisiert) werden können, wobei jedoch die Detektion die erforderliche Genauigkeit möglicherweise nicht erfüllt. Das heißt, der Ort eines detektierten Defekts ist mit einer Toleranz behaftet und auch die Klassifikation und darauf basierende Entscheidungen (z.B. "zu bearbeiten" oder "nicht zu bearbeiten") des Defekts können fehlerhaft sein.

In der ersten Inspektionszelle (in Fig. 2 links) bewegt sich das Bauteil z.B. durch einen Kameratunnel und wird inspiziert, wobei die Inspektion mit der erwähnten Ungenauigkeit behaftet ist. Basierend auf dem Ergebnis dieser ersten Inspektion wird die genaue Neu-Inspektion der detektierten Defekte und deren automatisierte Reparatur geplant. Zu diesem Zweck sind die Roboter der Bearbeitungszelle zusätzlich zu den Werkzeugen für die Reparatur der Defekte mit kompakten Inspektionssensoren ausgestattet für die genaue Inspektion vergleichsweise kleiner Bereiche um die zuvor detektierten Defekte. Bei der Einfahrt in die Bearbeitungszelle (in Fig. 2 rechts) wird vorzugsweise die Lage des Bauteils vermessen, und die Programme zur Inspektion und reaktiven Bearbeitung der Defekte werden erstellt und reaktiv, je nach Ergebnis der einzelnen Inspektion, adaptiert und ausgeführt.

In Fig. 2 bezeichnet Modul I die Inspektionszelle oder den Inspektionstunnel. Bezugszeichen 1.1 bezeichent das Bauteil/Werkstück, welches zu inspizieren und anschließend zu reparieren ist. Bezugszeichen 1.2 bezeichnet die Sensoren für die Inspektion des Bauteils. Das Modul II repräsentiert die Datenverarbeitung und die automatische, computergestützte Roboterbahnplanung. Dabei bezeichnet Bezugszeichen II.1 die Inspektionssoftware zur Erkennung und Klassifizierung der Defekte auf dem Bauteil, 11.2 die automatische, computergestützte Planung der Neuinspektion und der reaktiven Reparatur der gefunden Defekte und 11.3 die automatische Generierung der Roboterprogramme basierend auf den geplanten Bahnen und die deren reaktive Ausführung. Je nach Implementierung können eine Neuplanung und verschiedenen Methoden der Adaptierung der Bearbeitung vorgesehen. Diese Adaptierung hängt ab von dem Update (der Neuinspektion) der Defekte und erfolgt hinsichtlich Position, Klasse und Ausprägung der Defekte. Bezugszeichen 11.4 repräsentiert das Inspektionsmodul zu Neubewertung der Defekte.

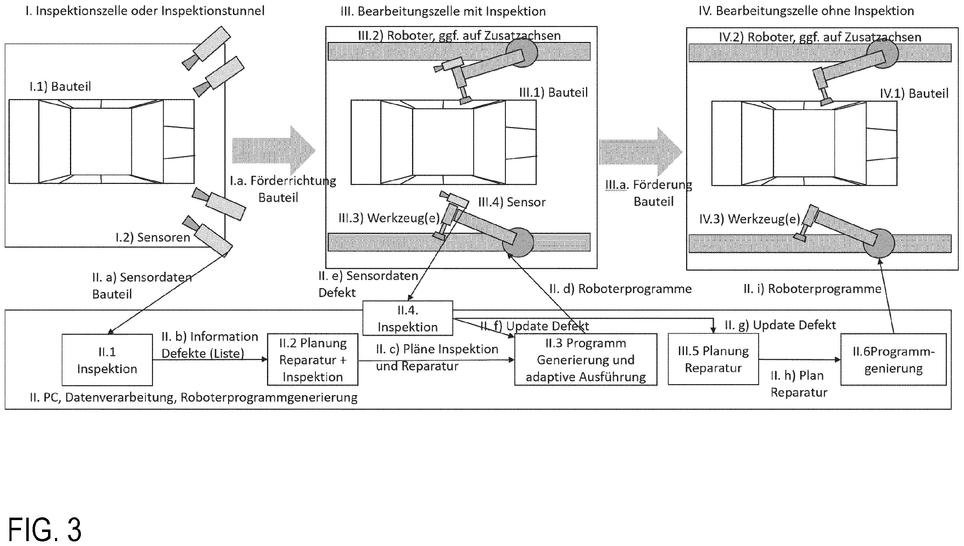

In Fig. 3 repräsentiert das Modul III die Bearbeitungszelle. Das Bezugszeichen III.1 bezeichnet das zu bearbeitende Bauteil, 111.2 bezeichnet den Roboter für die Bearbeitung, optional mit Zusatzachsen, 111.3 bezeichnet die am Roboter montierten Werkzeuge zur Bearbeitung der Defekte, und 111.4 bezeichnet die Sensoren zur erneuten Inspektion der zu reparierenden Defekte, die in der Inspektionszelle (Modul I), detektiert wurden.

In Fig. 2 ist der Datenfluss zwischen den einzelnen Modulen mit den Bezugszeichen II.a) bis II.d) bezeichnet. Das Bezugszeichen I.a bezeichnet die Bewegungsrichtung der Bauteils (z.B. auf einem Fließband). Das Bezugszeichen II.a bezeichnet die Sensordaten von den Inspektionskameras, II.b bezeichnet die resultierende Liste der gefundene Defekte, II.c bezeichnet die basierend auf der Liste ermittelten Roboterbahnpläne zur erneuten Inspektion und zur adaptiven Reparatur für die einzelnen Roboter, II.d bezeichnet die resultierenden Roboterprogramme und II.e bezeichnet die Sensordaten betreffend den neu inspizierten Defekt. Das Bezugszeichen II.f bezeichnet das Update der Defektinformation (umfassend z.B. Position, Klasse, Ausprägung) aufgrund der erneuten und genaueren Inspektion.

Fig. 3 illustriert exemplarisch das Prinzip der Reparatur von Defekten mit vorgelagerter ungenauer Inspektion und mehreren sequentiell angeordneten Bearbeitungszellen welche nicht den gleichen Prozess an verschiedenen Defekten, sondern aufeinander folgende Prozesse an den gleichen Defekten bearbeiten, welche in der ersten Bearbeitungszelle nocheinmal mit größerer Genauigkeit inspiziert werden. In Fig. 3 repräsentiert das Modul I eine Inspektionszelle oder einen Inspektionstunnel, in dem die erwähnte optische Inspektion zur Detektion bzw. Identifikation von Defekten durchgeführt. Diese erste Inspektion wird mit vergleichsweise geringer Genauigkeit durchgeführt. Das Bezugszeichen 1.1 bezeichnet jenes Bauteil, welches zu inspizieren und anschließend zu reparieren ist. Das Bezugszeichen 1.2 bezeichnet die Sensoren für die erste (ungenaue) Inspektion des Bauteils.

Das Modul II repräsentiert die Datenverarbeitung und Roboterbahnplanung basierend auf den Messdaten. Das Bezugszeichen 11. 1 bezeichnet die Inspektionssoftware zur Erkennung und Klassifizierung der Defekte auf dem Bauteil basierend auf den Messdaten. Das Bezugszeichen 11.2 bezeichnet die Planung der Neuinspektion und der reaktiven Reparatur der gefunden Defekte. Das Bezugszeichen 11.3 bezeichnet die Generierung der Roboterprogramme und die reaktive Ausführung, in verschiedenen Varianten mit oder ohne Neuplanung und mit verschiedenen Methoden der Adaptierung der Bearbeitung gemäß Update der Defekte hinsichtlich Position, Klasse und Ausprägung. Das Bezugszeichen 11.4 bezeichnet das Inspektionsmodul zu Neubewertung der Defekte (mit größerer Genauigkeit). Das Bezugszeichen 11.5 betrifft die Planung oder Reparaturschritte in weiteren, folgenden Zellen basierend auf den Informationen über die neu inspizierten Defekte. Ziffer 11.6 bezeichnet die Roboterprogrammgenerierung.

Das Modul III der Fig. 3 repräsentiert eine Bearbeitungszelle Das Bezugszeichen III.1 bezeichnet das zu bearbeitende Bauteil. Das Bezugszeichen 111.2 bezeichnet die Roboter für die Bearbeitung und die erneute Inspektion mit erhöhter Genauigkeit, optional mit Zusatzachsen. Das Bezugszeichen 111.3 bezeichnet die an den Robotern montierten Werkzeuge zur Bearbeitung der Defekte. Das Bezugszeichen 111.4 bezeichnet die Sensoren zur erneuten (genauerem) Inspektion der zu reparierenden Defekte. Das Modul IV repräsentiert eine weitere Bearbeitungszelle ohne robotermontierte Inspektionssensoren. Das Bezugszeichen IV.1 zeigt das zu bearbeitende Bauteil. Das Bezugszeichen IV.2 bezeichnet die Roboter für die Bearbeitung, optional mit Zusatzachsen, Das Bezugszeichen IV.3 bezeichnet die Werkzeuge zur Bearbeitung der gefundenen Defekte.

In **Fehler! Verweisquelle konnte nicht gefunden werden.** ist der Datenfluss zwischen den einzelnen Modulen mit Bezugszeichen II.a bis II.d bezeichnet und das Bezugszeichen I.a bezeichnet die Förderrichtung der Bauteils. Das Bezugszeichen II.a bezeichnet die Sensordaten von den Inspektionskameras, Ziffer II.b die Liste der gefundene Defekte, Ziffer II.c die Pläne zur erneuten Inspektion und adaptiven Reparatur für die einzelnen Roboter, Ziffer II.d die resultierenden Roboterprogramme, Ziffer II.e die Sensordaten betreffend die neu inspizierten Defekt, Ziffer II.f die Aktualisierung der Defektinformation (Position, Klasse, Ausprägung) und Ziffer II.g die Aktualisierung der Defektinformation (Position, Klasse, Ausprägung) für die Planung der folgenden Reparaturschritte in den nachfolgenden Roboterzellen. Das Bezugszeichen II.h bezeichnet die geplanten Roboterbahnen zur anschliessenden Reparatur und Ziffer II.i die daraus ermittelten Roboterprogramme.

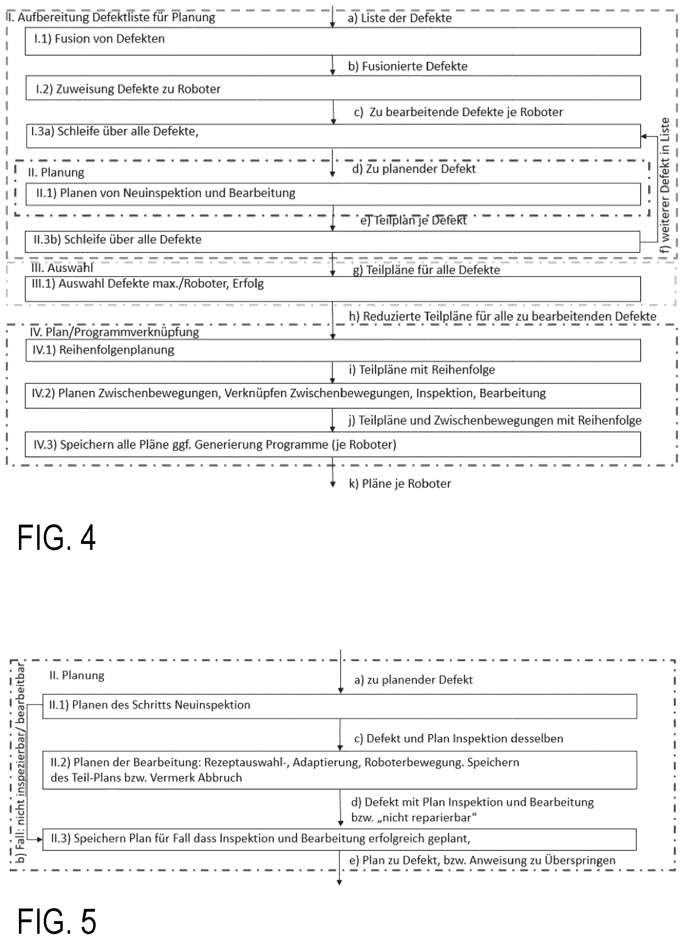

Fig. 4 gibt einen Überblick über alle verschiedenen vorgestellten Varianten der Inline-Planung der Inspektion und Bearbeitung der Defekte anhand eines Flussdiagrams, das den Daten-/Signalfluss visualisiert. Das Modul I repräsentiert die Vorverarbeitung und die schleifenweise Abarbeitung aller Defekte. Dabei bezeichnet 1.1 die Funktion zum Fusionieren benachbarter Defekte, d.h. Defekte mit einem Abstand, der geringer ist als ein Schwellwert, werden zusammengefasst und als ein Defekt behandelt, wenn diese sich auf der selben Komponente eines Bauteils und auf der selben Seite eines Merkmals (z.B. eine Kante) befinden. Die Funktion 1.2 weist die relevanten fusionierten Defekte den Robotern zu (oder dem Roboter, sofern es nur einen Roboter gibt). Die Funktion 1.3.a und 1.3.b repräsentieren die sequentielle Abarbeitung aller Defekte.

Das Modul II repräsentiert die eigentliche Planung von Inspektion und adaptiver Planung der Bearbeitung der Defekte. Das Modul III repräsentiert den nachfolgenden Schritt der Auswahl der Defekte, sofern die Anzahl der Defekte größer ist als jene Anzahl, die der/die Roboter in der gegebenen Zeit abarbeiten können, bzw. sollen. Kriterien sind z.B. die Erreichbarkeit, die Bearbeitbarkeit, die Robustheit, d.h. die Fehler welche ohne folgende Inspektion bearbeitet werden können, der Anteil möglicher Änderungen aufgrund der Varianten, welche erfolgreiche bearbeitet werden können versus nicht bearbeitet werden können.

Das Modul IV Plan/Programmverknüpfung präsentiert das Erstellen der kompletten Pläne/Programme aus den Plänen/Programmen einzelner Defekte mittels (IV.1) Reihenfolgeplanung, und der Planung der Verbindungsbewegung (IV.2) der Roboter (von Defekt zu Defekt, sowie das Speichern der Pläne und die Programmgenerierung (IV.3).

In Fig. 4 ist der Datenfluss zwischen den einzelnen Modulen mit Buchstaben (a) bis (o) bezeichnet. Buchstabe (a) repräsentiert die Liste aller (in der ungenauen Inspektion) gefundenen (und als relevant beurteilten) Defekte inklusive der Defektdaten (insbesondere ihrer Position, Ausprägung, Klasse, und vorteilhafterweise auch die zugehörigen Unsicherheiten betreffend Position, Ausprägung und Klasse). Die von den Inspektionssensoren ermittelten Defekte werden an die Reparaturplanung Module Aufbereitung übergeben.

Buchstabe (b) repräsentiert die Liste aller Defekte nach der Fusion der Defekte, bei welcher Defekte (näher als ein Maximalabstand, auf der gleichen Komponente befindlich und nicht durch Merkmale getrennt) zusammengefasst werden können. Buchstabe (c) repräsentiert die Liste aller Defekte je Roboter. Buchstabe (d) repräsentiert den als nächsten zu planenden Defekt. Buchstabe (e) repräsentiert den ermittleten (Teil-)Plan zur Inspektion und Bearbeitung dieses aktuellen Defekts, und Buchstabe (f) repräsentiert den "Sprung" zum nächsten Defekt in der Liste sofern die Liste noch nicht abgearbeitet ist (Softwareschleife). Bcuhstabe (g) repräsentiert die Daten betreffend alle (Teil-)Pläne für alle bearbeitbaren Defekte und Buchstabe (h) die Daten betreffend alle (Teil-)Pläne nach einer eventueller Reduktion sofern die Anzahl der Defekte einzelner Roboter die Anzahl der maximal reparierbaren übersteigt. Buchstabe (i) trpräsentiert die Teilpläne in idealer Reihenfolge, (j) repräsentiert die Pläne als Verknüpfung von Teilplänen zur Inspektion und Bearbeitung von Defekten und die diese verbindenden Zwischenbewegungen und (k) repräsentiert die kompletten Pläne, die für jeden Roboter gespeichert werden.

Fig. 5 zeigt (Modul 11, siehe auch Fig. 4) eine einfache Implementierung der Inline-Planung je eines Defekt im Detail, ohne explizites Inline-Antizipieren von Änderungen der Defekteigenschaften bei einer nachfolgenden Neuinspektion mit einem robotergeführten Sensor. Insbesondere führt dieses Modul das Planen der erneuten Inspektion durch (Schritt II.1). Schritt 11.2 bezeichnet das Planen der Bearbeitung allein auf Grundlage des Ergebnisses er ersten (ungenauen) Inspektion. Zudem wird Analyse des Bauteils im Bereich um den Defekt durchgeführt, sowie die Auswahl der Rezepte, Anpassung der Rezepte, Planung der Roboterbewegung und Signale. Im Erfolgsfall wird der Teil-plan/das Teilprogramm gespeichert. Im Fall, dass der Defekt nicht bearbeitbar oder planbar ist wird dieser als "nicht reparierbar" gespeichert. Schritt 11.3 bezeichnet das Speichern des kombinierten Plans für Inspektion mit anschließender Bearbeitung. Im Falle des Misserfolgs speichern dass nicht reparierbar und aus der Planung des gesamten Plans zu entfernen.

in Fig. 5 ist der Datenfluss mit den Buchstaben (a) bis (d) bezeichnet. Dabei bezeichnet Buchstabe (a) den nächsten Defekt (Position, Ausprägung, etc.), für den ein Plan erstellt werden soll. Buchstabe (b) bezeichnen einen Fall, in dem keine Inspektion durchführbar ist, weshalb der Defekt übersprungen wird. Buchstabe (c) bezeichnet den Defekt und den ermittelnten Teil-Plan für dessen erneute Inspektion mit erhöhter Genauigkeit, Buchstabe (d) bezeichnet den Defekt und den Teil-Plan für dessen Inspektion und Reparatur (falls planbar). Sofern eine Planung nicht möglich ist, wird der Defekt mit Vermerk "nicht reparierbar" gespeichert. Buchstabe (e) bezeichnet den Teil-Plan füe den jeweiligen Defekt zusammengesetzt für Inspektion und Bearbeitung falls die Planung erfolgreich war.Andernfalls besteht der Plan nur aus der Anweisung "Defekt überspringen", und der Defekt wird bei der weiteren Planung ausgenommen.

Bei diesem Ausführungsbeipsielerfolgt noch keine genaue Prüfung, bei welchen Abweichungen von dem gemessenen Daten der DEfekt noch bearbeitbar ist und bei welchen Abweichungen nicht mehr.. Folglich bietet dieses Ausführungsbeispiel nicht die Möglichkeit, auf veränderte Defektdaten aufgrund der Neuinspektion schnell zu reagieren. Fall das Reparierbar aber nicht Neuinspektion nicht planbar führt zu zusätzlichen Verwerfungen.

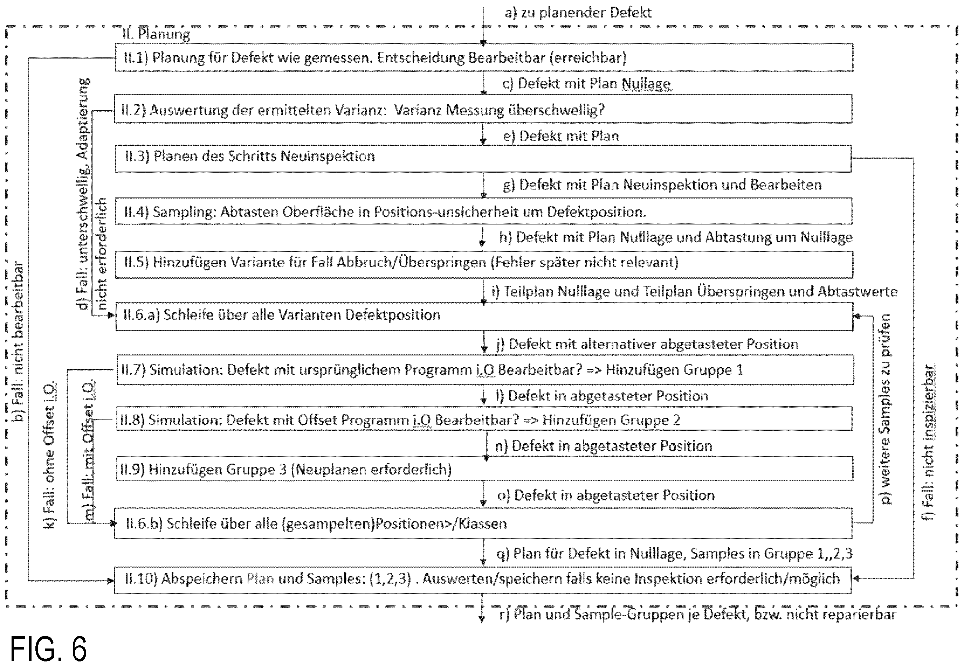

Fig. 6 zeigt (Modul 11, siehe auch Fig. 4) das Planen von Roboterplanung für die reaktive Bearbeitung mit Antizipieren der Reaktion auf spätere Positionsabweichungen aus der Neuinspektion, inklusive Sampling aber ohne Planung von Programmalterativen/Planalternativen.

In dem in Fig. 6 dargestellten Beipsiel betrifft die Funktion II.1 (Verfahrensschritt) die Planung einer Roboterbahn für dieReparatur eines Defekts basierend auf den Messsdaten der ersten, ungenauen Inspektion. Diese Planung umfass auch die computergestützte Prüfung, ob die geplante Bahn erreichbar ist und der Defekt bearbeitbar ist. Die Funktion 11.2 betrifft das Auswerten der ermittelten Varianz aus der Inline-Inspektion, und die Entscheidung, ob die erwartete Varianz des Defekts klein genug ist, um ohne weitere Betrachtung eine Reparatur mit dem Plan/Programm für den ursprünglichen Defekt (d.h. basierend auf den ursprünglichen Messdaten) durchführen zu können. Die Funktion 11.3 betrifft das Planen der Neuinspektion des Defektes mit dem genaueren, auf einem Roboter montierten Sensor. Die Funktion 11.4 betrifft das "Abtasten" (Sampling) der Oberfläche in einem Unsicherheitsereich um den detektierten Defekt herum..

Die Funktion 11.5 betrifft das Planen des Teilplans für das Überspringen der Reparatur. Damit wird ein Fall antizipiert, in dem basierend auf der nachfolgenden Neuinspektion der Fehler anders bewertet wird als in der ursprünglichen Inspektion (z.B. als nicht mehr relevant oder nicht reparierbar). Die Funktion II.6.a bezeichnen den Beginn der Schleife über alle in 11.4 ermittelten alternativen Defektpositionen (Samples) und die Funktion 11.6. b bezeichnet das Ende der Schleife über alle in 11.4 ermittelten alternativen Defektpositionen.

Innerhalb der Schleife betrifft die Funktion 11.7 die Simulation der Reparatur des alternativen Defekts (Sample) mit dem ursprünglichen unveränderten Programm sowie die Prüfung, ob der alternative Defekt ebenfalls zufriedenstellend ("in Ordnung") bearbeitet werden kann. Ist dies der Fall, dann wird das jeweilige Sample der "Gruppe 1" (Gruppe 1 - "unverändert") zugewiesen. Die Funktion 11.8 betrifft die Simulation der Reparatur des alternativen Defekts (Sample) mit dem ursprünglichen Programm, das um einen Offset verschoben wurde, der dem Offset zwischen dem unverändertem Defekt und und gesampelten Defekt entspricht. Basierend auf dieser Simulation kann geprüft werden, ob der alternative Defekt (Sample) damit "in Ordnung" bearbeitet werden kann. Ist dies der Fall, dann wird das jeweilige Sample der "Gruppe 2" (Gruppe 2 - "mit Offset") zugewiesen. Die Funktion 11.9 betrifft das Hinzufügen des Samples zu der "Gruppe 3" (Gruppe 3 - "Neuplanung erforderlich"). In einem weiteren Ausführungsbeispiel kann für dieses Sample ein Teil-Plan geplant werden. Alternativ, kann die Gruppe 3 als "nicht reparieren" interpretiert werden. Die Funktion II.10 betrifft das Abspeichern der ermittelten Pläne und der zugehörigen Samples.

In Fig. 6 ist der Datenfluss mit den Buchstaben (a) bis (r) dargestellt: (a) bezeichnet die ursprünlichen (ungenauen) Messdaten (Position, Ausprägung, etc.) betreffend einen Defekt, (b) bezeichnet die Messdaten zu einem Defekt, der nicht reparaierbar ist oder für den eine Bahnplanung nicht möglich ist (c) bezeichnet die Weitergabe der Beschreibung des Defekts in unveränderter Lage. (d) bezeichnen den Fall, dass für einen Defekt keine Adaptierung des Reparaturprogramms/-plans erforderlich und kein Samplen des Bereichs um den Defekt erforderlich ist. (e) bezeichnet einen Defekt mit Plan ohne Anpassung, (f) bezeichnet den Fall, dass der Defekt nicht online inspizierbar ist, (g) bezeichnet einen Defekt inklusive Teil-Plan/Programm für dessen Online-Inspektion, (h) bezeichnet einen Defekt unverändert mit Teilplan/Programm für dessen Bearbeitung und Abtastung/Sampling um den Defekt gemäß dessen ermittelte Varianz. (i) bezeichnet einen Teilplan für Reparatur des unveränderten Defekts und für das Überspringen dessen Bearbeitung, (j) bezeichnet den unveränderten Defekt und die aktuell zu prüfenden Samples/Abtastung der Position um den Defekt, (k) bezeichnet eine Fallunterscheidung, nämlich jenen Fall, in dem die Bearbeitung des Samples mit dem ursprünglichem Programm ohne Offset i.O. möglich ist. (1) bezeichnet den unveränderten Defekt und die aktuell zu prüfenden Samples/Abtastung der Position um den Defekt, (m) bezeichnet in der Fallunterscheidnung jenen Fall, in dem die Bearbeitung des Samples mit ursprünglichem Programm plus Offset i.O. möglich ist. (n) bezeichnet den unveränderten Defekt und die aktuell zu prüfenden Samples/Abtastung der Position um den Defekt, (o) bezeichnet den Unveränderten Defekt und die aktuell zu prüfenden Samples/Abtastung der Position um den Defekt, (p) bezeichnet den Rücksprung zum nächstem Sample, (q) bezeichnet den Plan / das Programm für den unveränderten Defekt, Samples zugeordnet zu Gruppen (1 unverändert, 2 "mit offset", 3 "Neulanung erforderlich"). (r) bezeichnet den Teilplan / das Programm für Reparatur des unveränderten Defekts und für dessen Überspringen, sowie Eingruppierung der Samples, bzw. Verweis für Überspringen des Defektes.

Das dargestellte Ausführungsbeispiel erlaubt es, Änderungen des Inspektionsergebnisses in Bezug auf die Position oder die Bewertung (ob ein Defekt zu reparieren bzw. reparierbar ist) zu antizipieren und spart dann während der eigentlichen Durchführung der Reparaturen Zeit. Zudem ist die Sicherheit im Hinblick auf Kollisionen oder sonstige Probleme größer. Der Zuwachs an erforderlicher Rechenleistung für die Planung ist moderat. Änderungen in der Art der Defekte, welche eine andere Art der Reparatur erforderlihc machen. werden nicht antizipiert und müssen (sofern sie später online auftreten) neu geplant werden, oder die Reparatur muss übersprungen werden.

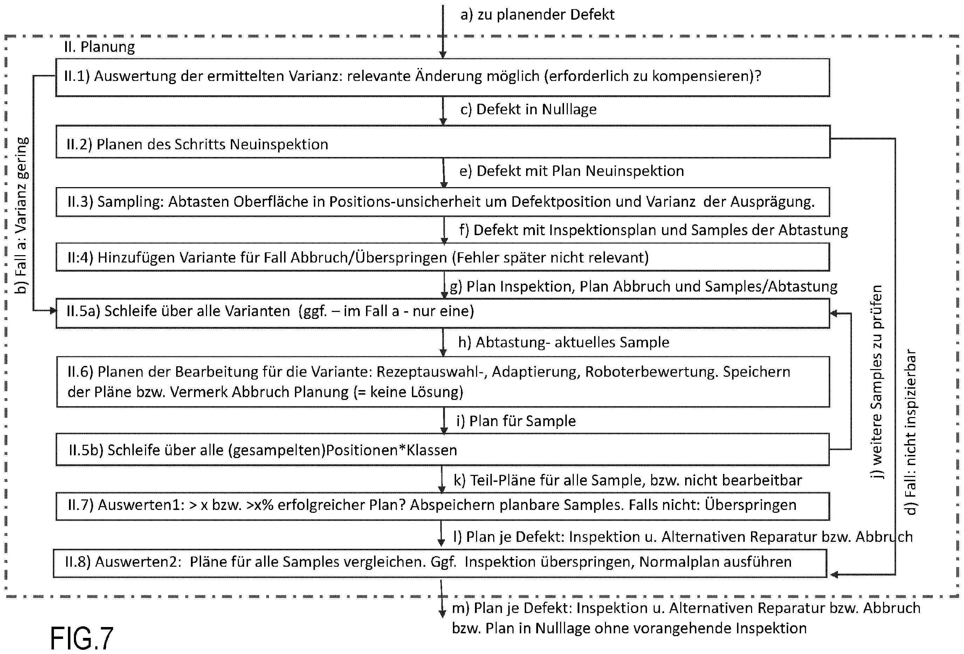

Fig. 7 zeigt das Planen (Modul II) von reaktiver Bearbeitung mit Antizipieren der Reaktion auf spätere Positionsabweichungen und Änderungen in der Klassifikation oder bestimmen Ausprägung des Defekt während der Neuinspektion (inklusive Sampling und paralleler Planung von Programmalterativen / Planalternativen je Sample). Ich Fig. 7 bezeichnen: Funktion 11. 1) das Auswerten der ermittelten Varianz aus der inline Inspektion, Entscheidung ob erwartete Varianz des Defekts klein genug ist um ohne weitere Betrachtung eine Reparatur mit dem Plan/Programm für den ursprünglichen Defekt durchführen zu können. Funktion 11.2) die Planung der Neuinspektion mit dem Robotermontierten Sensor für den Defekt. Prüfung Erreichbarkeit/Inspizierbarkeit. Funktion II.3) das "Abtasten" der Oberfläche um den Defekt (Samples) in dem Unsicherheitsbereich in der Position und in der Unsicherheit in der Klasse und Ausprägung des Defektes. Funktion II.4) das Planen des Teilplans für das Überspringen der Reparatur. Das antizipiert den Fall, dass in der späteren Neuinspektion der Fehler anders ist als in der ursprünglichen Inspektion ermittelt (z.B. als nicht mehr relevant oder nicht reparierbar eingestuft wird). Funktion 11.5 a) Beginn der Schleife über alle in 11.3 ermittelten alternativen Defekte (Samples). Funktion II.6) die NeuPlanung der Reparatur für den aktuellen alternativen Defekt (Sample) gemäß variierter Position, Klasse, Ausprägung. Prüfung der Ausführung und ggf. Markieren des Samples als nicht reparierbar. Funktion 11.5 b) Ende der Schleife über alle in ermittelten alternativen Defektpositionen, - Klassen, -Ausprägungen (Samples). Funktoion 11.7) die Auswertung ob die Anzahl der Samples für die der Defekt laut Planung repariert werden kann größer als ein Mindestwert ist, bzw. der prozentuelle Anteil and allen Samples über einem prozentualen Schwellwert liegt. Funktion 11.8 die Nachbearbeitung, nämlich das Überprüfen, ob die Pläne für alle Sample in Bezug auf Rezept, Werkzeugbahn, Roboterkonfiguration Roboterbewegung ähnlich sind. In diesem Fall werden diese ggf. zusammengefasst, d.h. markiert, um beim Zusammenfügen der Teilpläne das "online Neuinspizieren" zu überspringen und den einen ursprünglichen Teil-Plan/Teil-Programm zu verwenden, um den Defekt ohne vorhergehende Inspektion zu reparieren.

In dem in Fig. 7dargestellten Beispiel wird der Datenfluss mittels der Buchstaben a) bis m) dargestellt. Dabei bezeichnen: a) den zu planender Defekt, b) die Varianz des Defekts wie gemessen (geringfügige oder keine Adaptierung des Reparaturprogramms/-plans erforderlich, kein Samplen des Bereichs der Varianz erforderlich), c) die Weitergabe Beschreibung des Defekts in unveränderter Lage, (d) den Fall, dass der Defekt nicht inspizierbar ist, e) einen Defekt mit Teilplan/Programm Neuinspektion, f) einen Defekt unverändert mit Teilplan/Programm für dessen Bearbeitung und Abtastung/Sampling um den Defekt gemäß dessen ermittelte Varianz in Position, Klasse, Ausprägung, g) das aktuelle zu planende Sample, i) den Teilplan für das aktuelle Sample, j) die Prüfungs weiterer Samples, k) Teilpläne für alle Samples bzw. als "nicht reparierbar" bewertete Samples, l) den Teilplan für Defekt zusammengesetzt aus Neuinspektion und alle alternativen Pläne für alle Samples, unveränderter Defekt und aktuell zu prüfendes Samples/Abtastung der Position um den Defekt, m) den Teilplan / das Programm für Inspektion und alternative Teilpläne zur Reparatur des Samples des Defekts.

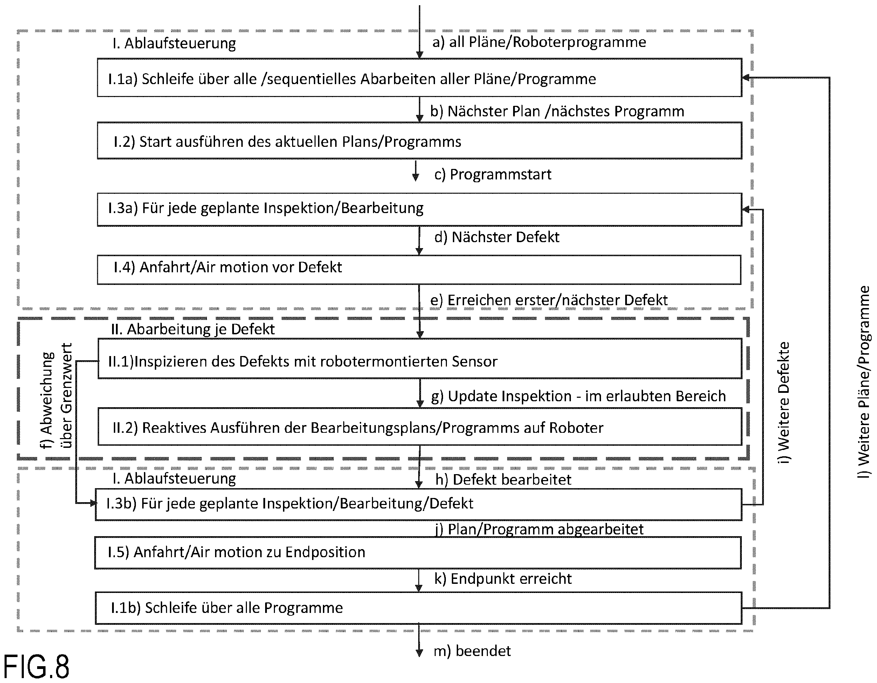

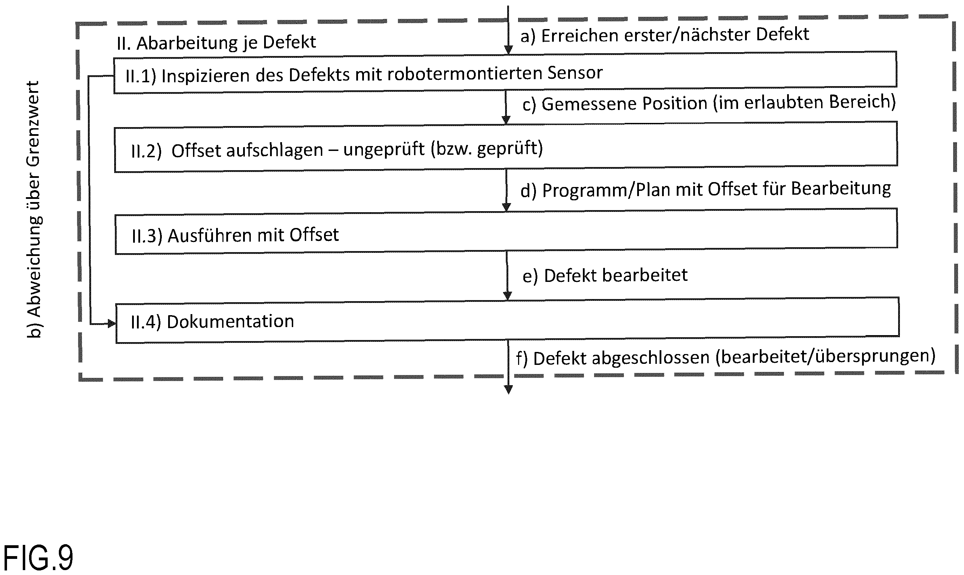

Fig. 8 illustriert das Online Adaptieren, d.h. das reaktive Neuplanen. Der folgende Überblick umfasst alle in Fig. 9-12 aufgeführten Versionen.

Das in Fig. 8 gezeigte Modul I betrifft die Ablaufsteuerung. Diese beinhaltet die verschachtelte, schleifenartige Abarbeitung über alle Pläne/Programme eines Roboters und die Schleife über alle Defekte innerhalb dieser Programme/Pläne. Funktion I.1a): Abarbeitung aller Pläne/Programme je Roboter. Start der Schleife. Funktion 1.2) Start der Ausführung des aktuelle Plans/Programms. Funktion 1.3a): Abarbeitung aller Defekte je aktuellem Plane/Program. Start der Schleife. Funktion 1.4) Ausführen des Teilplans und Anfahren der Inspektionsposition vor/über dem Defekt. Funktion 1.3b): Abarbeitung aller Defekte je aktuellem Plane/Program. Ende der Schleife. Funktion 1.5) Ausführen des letzten Teilplans und Anfahren der Endposition des Programms/Plans. Funktion I.1b): Abarbeitung aller Pläne/Programme je Roboter. Ende der Schleife. Modul II: beinhaltet die reaktive Abarbeitung eines jeden Defekts. Funktion II.1) Ausführung des Teilplans/-Programms zur Inspektion des Defekts mit dem robotermontierten Sensor, Auswertung der Sensordaten, Ermitteln des Inspektionsergebnisses. Funktion II.2) Reaktive Ausführung der Bearbeitung des neu vermessenen Defekt mit dem Roboter.

In einer alternativen Realisierung kann jeder Defekt nach der Bearbeitung mit dem robotermontierten Inspektionssensor neu inspiziert und gegebenenfalls erneut bearbeitet werden.

In Fig. 9 ist der Datenfluss mit den Buchstaben a) bis m) dargestellt. Dabei bezeichnen: a) alle Päne/Programme je Roboter, b) den nächsten Plan/Roboterprogramm, c) den Start der Programmausführung, d) den nächsten Defekt, e) Das Erreichen des nächsten Defekts, f) das Überspringen der Bearbeitung für den Fall, dass eine Abweichung des neu inspizierten Defekts zur ursprünglichen Inspektion über einer Schwelle liegt, g) das Update des Inspektionsergebnisses für den Fall dass eine Änderung im erlaubten Bereich liegt, h) die Durchführung der Defektbearbeitung, i) Sprungmarke, Fall: weitere Defekte im Plan/Programm, j) alle Defekte im Fall Plan/Programm abgearbeitet, k) Endpunkt/-position im Programm erreicht, l) Fall weitere Pläne/Programme für den Roboter, m) alle Pläne/Programme für den Roboter abgearbeitet.

Das in Fig. 9 dgezeigten Modul II illustriert eine einfachere Realisierung einer reaktiven Abarbeitung eines Defekts, lediglich mit vermessenem Offset. Dabei bezeichnen Funktion II.1) die Anfahrt des Inspektionspunktes und Ausführen der Inspektion des Defektes - Ermittlung neue Position/Offset. In einer vorteilhaften Realisierung ggf. Einleiten des Überspringens, falls die Änderung der Defektposition über einem vorab definierten festen Grenzwert liegt. Funktion II.2) Das ungeprüfte Adaptieren des Nullprogramm: Programm mit Offset beaufschlagen / einfache Koordinatentransformation als Stand der Technik Funktion einer Robotersteuerung. Funktion II.3) Programmausführung, vorteilhaft mit Kollisionsüberwachung des Roboters als Stand der Technik Funktion einer Roboterstuerung. Funktion II.4) Funktion zur Dokumentation der Ausführung der Bearbeitung

In Fig. 9 ist der Datenfluss mit den Buchstaben a) bis f) dargestellt: Dabei bezeichnen a) Erreichendes zu reparierender Defekt, b) den Fall, dass der gemessene Offset größer als ein Schwellwert ist. c) Update der Defektinformation für den gemäß Neuinspektion bearbeitbaren Defekt: Nur Defektposition, d) Mit Offset beaufschlagtes Roboterprogramm, e) Information dass Defekt bearbeitet f) Meldung über Defektbearbeitung mit Status (Abgebrochen, bzw. repariert).

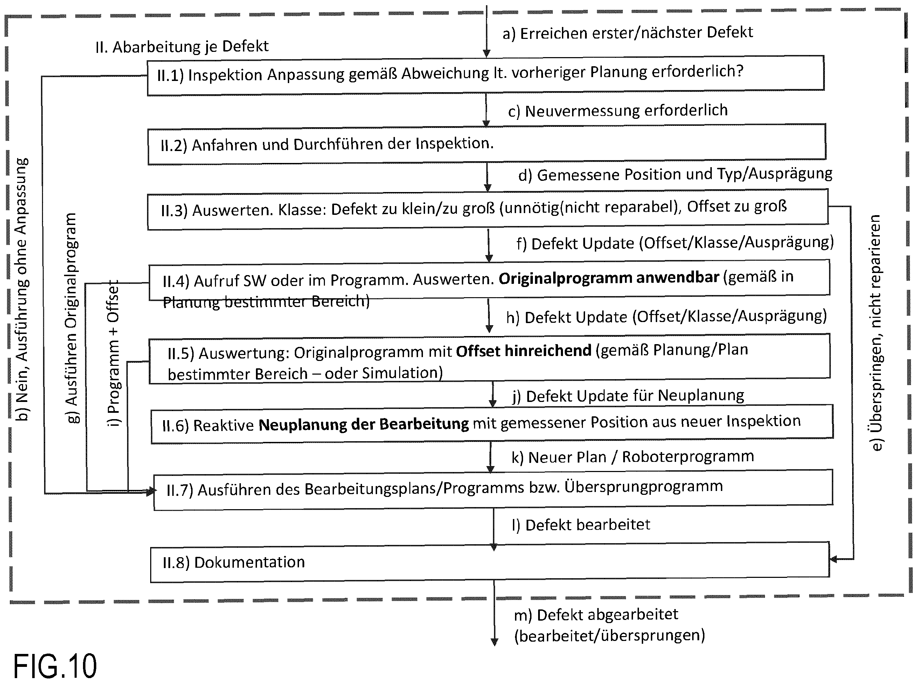

Das in Fig. 10 dargestellte Modul II illustriert die reaktive Abarbeitung eines Defekts als Teil eines Programmes je nach Auswertung der Gruppen mit Null-programm, Null-programm mit gemessenem Versatz, oder Neuplanung. Funktion II.1) Abfrage ob gemäß vorheriger Inline-Planung eine Neuinspektion erforderlich ist. (Falls ja) Funktion II.2) Anfahrt des Inspektionspunktes und Ausführen der Inspektion des Defektes. II.3) Funktion zur Neubewertung der Defektklasse, gegebenenfalls Einleiten eines Übersprungs der Bearbeitung falls der Defekt wie neu vermessen nicht bearbeitbar oder nicht zu bearbeiten ist oder der gemessene Offset über einem definierten oder ermittelten Grenzwert liegt. Funktion II.4) Auswertung ob der Defekt nahe eines Wertes der Gruppe 1 und damit mit Nullprogramm reparierbar. Diese Auswertung kann über einen Aufruf der Planungssoftware vom Roboter aus erreicht werden, oder der Vergleich ist bei der Programmgenerierung im Roboterprogramm eingebaut. Funktion II.5) Auswertung, ob der Defekt nahe eines Wertes der Gruppe 2 und damit mit Nullprogramm mit reinem Offset reparierbar. Funktion II.6) Neuplanung der Defektbearbeitung mit gemessenem neuen Defektposition, Klasse und Ausprägung, für Defekte nahe eines Wertes der Gruppe 3. Funktion II.7) Funktion Ausführung der Bearbeitungsprogramms für alle 3 Fälle/Gruppen (1) Nullprogramm, (2) Nullprogramm mit Offset, (3)neu geplantes Bearbeitungsprogramm. Wenn offset zu groß, dann Abbruch. II.8) Funktion zur Dokumentation der Ausführung oder des Abbruchs/Überspringens der Bearbeitung (Gründe, Sollparameter versus Ist-Parameter etc.).

In Fig. 10 ist der Datenfluss mit Buchstaben a) bis m) dargestellt. Dabei bezeichnen a) den zu reparierenden Defekt, b) den Fall, dass laut vorheriger inline Planung keine Neuinspektion erforderlich ist. In diesem Dall wird direkt weitergemacht mit Nullprogramm. c) Information über nächsten Defekt (Fall das Neuvermessung erforderlich ist), d) die Daten der Neuinspektion, Update Position und Ausprägung/Typ Defekt, e) den Fall, dass Defekt nicht bearbeiten werden muss oder kann, oder der gemessene Offset größer als ein Schwellwert ist, f) Update der Defektinformation für den gemäß Neuinspektion bearbeitbaren Defekt: Position, Ausprägung, Klasse, g) den Fall, dass Änderung geringfügig genug ist, um mit Null-programm (Originalprogramm anwendbar) zu arbeiten. h) das Durchreichen des Updates der Defektinformation für den Fall dass Originalprogramm nicht unverändert anwendbar ist, i) den Fall, dass Änderung in der Gruppe liegt, welche durch Null-programm (Originalprogramm) mit einfachem Offset laut vorhergehender inline Planung reparierbar ist. j) das Durchreichen des Updates der Defektinformation für eine Neuplanung. k) das neu geplante Plan/Programm für die adaptierte Bearbeitung des Defekts. l) Information, dass Defekt bearbeitet wird, mit Parametern. m) Meldung über Defektbearbeitung mit Status (Abgebrochen, repariert) mit Parametern.

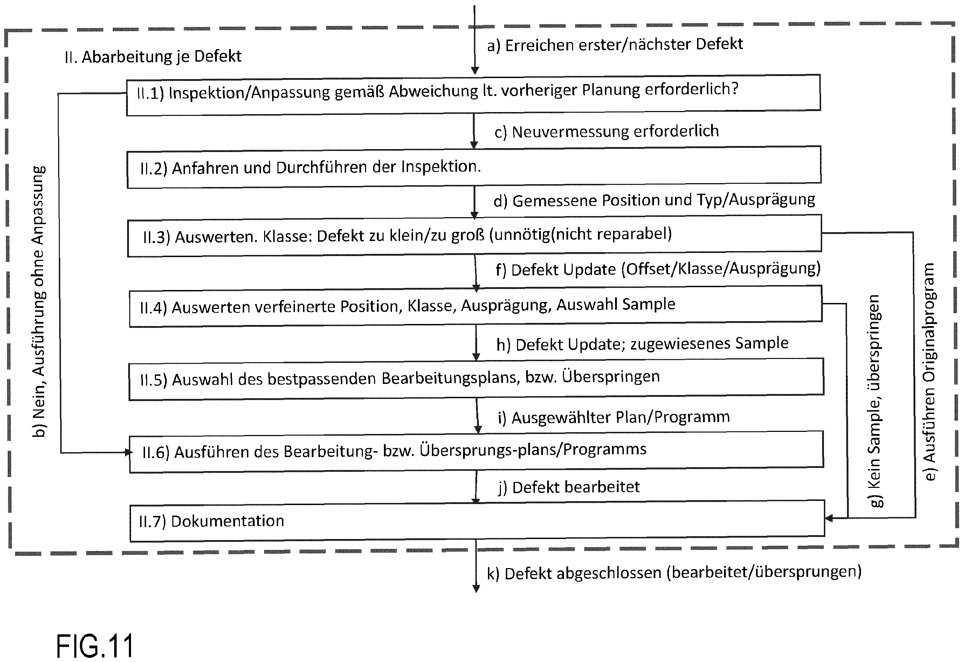

Das in Fig. 11 dargestellte Modul II illusrtiert die reaktive Abarbeitung eines Defekts als Teil eines Programmes je nach Vergleich zwischen inline ermitteltem Sample und neu inspiziertem Defekt (Ein Plan je Sample des Defekts). Abgearbeitet wird der Plan aus der Menge aller inline (parallel) geplanten Planvarianten, dessen Sample am ähnlichsten ist zu neu vermessenen Defekt gemäß Ausprägung, Klasse und Position In Modul II bezeichnen: Funktion II.1) die Abfrage ob gemäß vorheriger Inline-Planung eine Neuinspektion erforderlich ist, Falls ja, die Funktion II.2) die Anfahrt des Inspektionspunktes und das Ausführen der Inspektion des Defektes. Funktion II.3) die Funktion zur Neubewertung der Defektklasse, gegebenenfalls Einleiten eines Übersprungs der Bearbeitung falls der Defekt wie neu vermessen aufgrund seiner Ausprägung und Parameter (nicht Position) nicht bearbeitbar oder nicht zu bearbeiten ist. In einer alternativen Ausprägung kann die Entscheidung ob ein Defekt nicht bearbeitbar ist daraus abgeleitet werden, dass in der inline Planung kein ähnliches Sample getestet wurde. Funktion II.4) bezeichnet die Ermittlung des dem Defekt gemäß Position, Klasse und Ausprägung ähnlichsten Samples. Diese Auswertung kann über einen Aufruf der Planungssoftware vom Roboter aus erreicht werden, oder der Vergleich ist bei der Programmgenerierung im Roboterprogramm eingebaut. Funktion II.5) bezeichnet die Zuweisung des inline für den ausgewählten Sample geplanten Plans oder Programms zur Bearbeitung bzw. zum Überspringen der Bearbeitung. Funktion II.6) bezeichnet die Funktion der Ausführung des Bearbeitungsprogramms oder des Programmabschnitts zum Überspringen der Bearbeitung . II.7) bezeichnet die Funktion zur Dokumentation der Ausführung oder des Abbruchs/Überspringens der Bearbeitung (Gründe, Sollparameter versus Istparameter etc.).

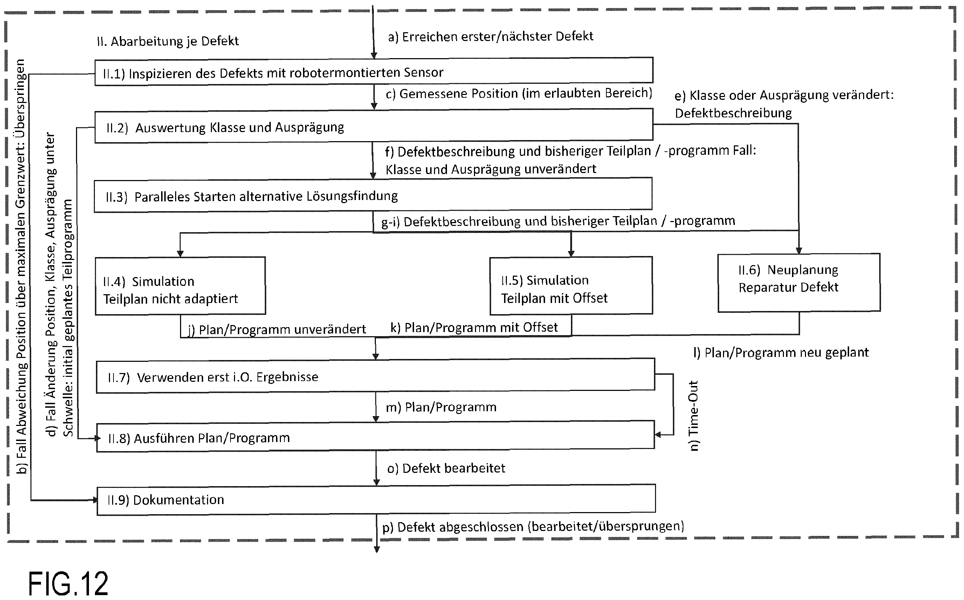

In Fig. 11 ist der Datenfluss mit den Buchstaben a) bis l) dargestellt. Dabei bezeichnen a) den zu reparierenden Defekt, b) den Fall, dass laut vorheriger inline Planung keine Neuinspektion erforderlich ist. In diesem Fall wird direkt weitergemacht mit dem Nullprogramm, c) bezeichnet die Information über nächsten Defekt - Fall, dass Neuvermessung erforderlich ist, d) die Daten der Neuinspektion, Update Position und Ausprägung/Typ Defekt, e) den Fall, dass der Defekt nicht bearbeiten werden muss oder kann. f) das Update der Defektinformation für den gemäß Neuinspektion bearbeitbaren Defekt: Position, Ausprägung, Klasse, g) den Fall, dass kein ähnliches Sample gefunden - überspringen des Defekts- Alternativ wäre auhc eine Neuplanung möglichwie in Fig. 12 dargestellt. h) Zugewiesenes Sample mit Update der Defektinformation i) Zugewiesener Plan / Programm. j) Information dass Defekt bearbeitet, mit Parametern. m) Meldung über Defektbearbeitung mit Status (Abgebrochen, repariert) mit Parametern.

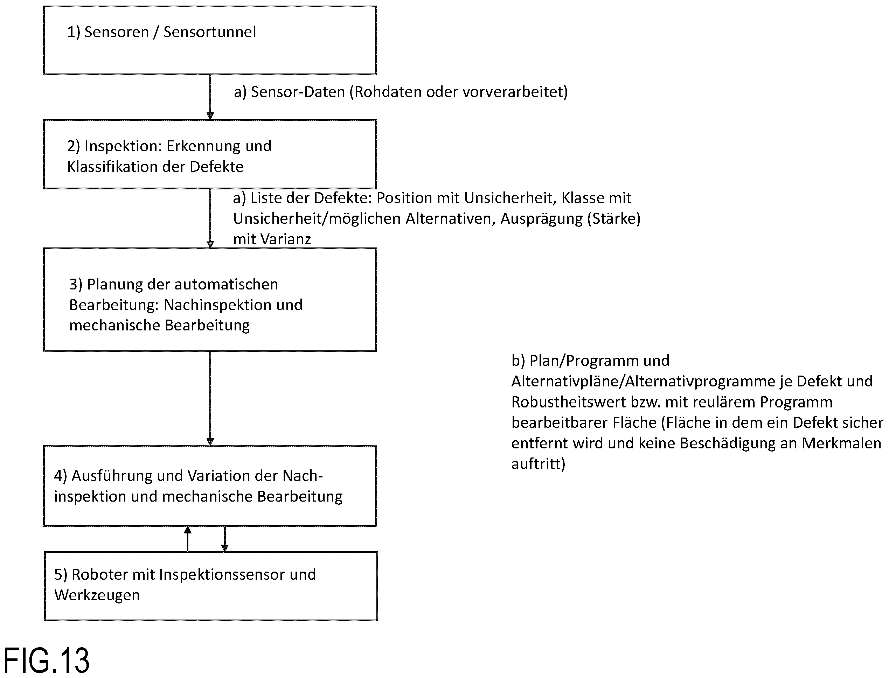

In Fig. 13 ist der gesamte Ablauf in einem Flussdiagramm zusammengefasst.

## Patentansprüche

1. Verfahren, das folgendes umfasst:
Durchführen einer ersten optischen Inspektion eines Werkstücks mittels eines oder mehrerer ersten Sensoren;
Detektieren von Defekten auf der Oberfläche des Werkstücks und Ermitteln von ersten Defektdaten, die die detektierten Defekte charakterisieren, basierend auf Messdaten, die bei der ersten optischen Inspektion gemessen wurden,
Durchführen - für mindestens einen Defekt der detektierten Defekte und basierend auf den zugehörigen ersten Defektdaten - einer automatischen, computergestützten ersten Roboterbahnplanung zur Ermittlung einer Roboterbahn für eine zweite Inspektion des Werkstücks im Bereich um den mindestens einen Defekt und zur Ermittlung einer oder mehrerer Roboterbahnen zur Bearbeitung des mindestens einen Defekts;
Durchführen der zweiten optischen Inspektion des Werkstücks mittels eines oder mehrere robotergeführten, zweiten Sensoren und Ermitteln von zweiten Defektdaten, die den mindestens einen Defekt charakterisieren, basierend auf Messdaten, die bei der zweiten optischen Inspektion gemessen wurden;
Prüfen - basierend auf den zweiten Defektdaten - ob der mindestens eine Defekt mit einer ersten der geplanten Roboterbahnen oder - sofern vorhanden - einer anderen der geplanten Roboterbahnen bearbeitet werden kann, und, falls ja, automatisches, robotergestütztes Bearbeiten des mindestens einen Defekts unter Verwendung der jeweiligen Roboterbahn;
falls der mindestens eine Defekt nicht mit einer der geplanten Roboterbahnen bearbeitet werden kann: Durchführen einer zweiten Roboterbahnplanung zur Ermittlung einer neuen Roboterbahn zur Bearbeitung des mindestens einen Defekt basierend auf den jeweiligen zweiten Defektdaten, und automatisches, robotergestütztes Bearbeiten des mindestens einen Defekts unter Verwendung der neuen Roboterbahn.

2. Das Verfahren gemäß Anspruch 1, wobei das Durchführen der zweiten Roboterbahnplanung aufweist:
Modifizieren einer der geplanten Roboterbahnen basierend auf den zweiten Defektdaten.

3. Das Verfahren gemäß Anspruch 1 oder 2, wobei das Durchführen der ersten Roboterbahnplanung aufweist:
Planen einer Roboterbahn basierend auf den ersten Defektdaten;
mehrfaches Modifizieren der ersten Defektdaten und, für jede Modifikation, Planen einer weiteren Roboterbahn basierend auf den modifizierten Defektdaten.

4. Das Verfahren gemäß einem der Ansprüche 1 bis 3,
wobei die ersten Defektdaten und die zweiten Defektdaten mindestens folgendes umfassen: die Position des jewieligen Defekts auf der Werkstückoberfläche und Daten betreffend die Ausprägung des Defekts.

5. Das Verfahren gemäß Anspruch 4, soweit rückbezogen auf Anspruch 3,
wobei das Modifizieren der ersten Defektdaten das Modifizieren der Position des jeweiligen Defekts innerhalb eines bestimmten Bereichs um den Defekt umfasst,
wobei der bestimmte Bereich von der Genaugkeit der ersten optischen Inspektion abhängt.

6. Das Verfahren gemäß Anspruch 5,
wobei das Modifizieren der ersten Defektdaten das Modifizieren der Ausprägung des jewieligen Defekts innerhalb eines bestimmten Bereichs, der von der Genaugkeit der ersten optischen Inspektion abhängt.

7. Das Verfahren gemäß einem der Ansprüche 1 bis 6, sofern rückbezogen auf Anspruch 3, wobei das Prüfen aufweist:
Ermitteln, ob für den jeweiligen Defekt die zweiten Defektdaten - unter Berücksichtigung einer vorgegebenen Toleranz - näherungsweise mit den ersten Defektdaten übereinstimmen, wobei, falls ja, für das anschließende Bearbeiten des jeweiligen Defekts die erste der geplanten Roboterbahn verwendet wird; oder
Ermitteln, ob für den jeweiligen Defekt die zweiten Defektdaten - unter Berücksichtigung der vorgegebenen Toleranz - näherungsweise mit bestimmten modifizierten Defektdaten übereinstimmen, wobei, falls ja, für das anschließende Bearbeiten des jeweiligen Defekts die jene der geplanten Roboterbahn verwendet wird, die aif den bestimmten modifizierten Defektdaten basiert.
